(19) Europäisches Patentamt
European Patent Office
Office européen des brevets

(11) EP 2 657 730 A1

(12) **EUROPEAN PATENT APPLICATION**
published in accordance with Art. 153(4) EPC

(43) Date of publication:
**30.10.2013 Bulletin 2013/44**

(21) Application number: **11851808.3**

(22) Date of filing: **22.12.2011**

(51) Int Cl.:
***G02B 1/11*** *(2006.01)* ***B32B 5/14*** *(2006.01)*
***B32B 7/02*** *(2006.01)* ***C08G 65/333*** *(2006.01)*

(86) International application number:
**PCT/JP2011/079796**

(87) International publication number:
**WO 2012/086748 (28.06.2012 Gazette 2012/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.12.2010 JP 2010285372**

(71) Applicant: **Mitsubishi Rayon Co., Ltd.**
**Tokyo 100-8253 (JP)**

(72) Inventors:
- **OKAFUJI, Hiroshi**
**Otake-shi**
**Hiroshima 739-0693 (JP)**
- **KAWAI, Osamu**
**Otake-shi**
**Hiroshima 739-0693 (JP)**
- **SAWANO, Tetsuya**
**Yokohama-shi**
**Kanagawa 230-0053 (JP)**
- **YAMAZAWA, Hideto**
**Otake-shi**
**Hiroshima 739-0693 (JP)**

(74) Representative: **Ter Meer Steinmeister & Partner**
**Me/bk**
**Mauerkircherstrasse 45**
**81679 München (DE)**

(54) **FILM CONTAINING METAL OXIDE PARTICLES, TRANSFER FILM, METHOD FOR PRODUCING SAME, LAMINATE, AND METHOD FOR PRODUCING SAME**

(57) Provided is a transfer film that includes, as a medium-refractive-index film, a film containing metal oxide particles that has a central region in which there are no metal oxide particles, a surface-layer region (a1) formed on one side of the central region and including metal oxide particles, and a surface-layer region (a2) formed on the opposite side of the central region and including metal oxide particles, the transfer film being capable of providing a laminate that has excellent stain resistance, anti-reflection characteristics, transparency, sweat resistance, and scratch resistance, and in which interference patterns are reduced. By using said transfer film, it is possible to obtain a laminate that has excellent stain resistance, anti-reflection characteristics, transparency, sweat resistance, and scratch resistance, and in which interference patterns are reduced.

FIG. 1

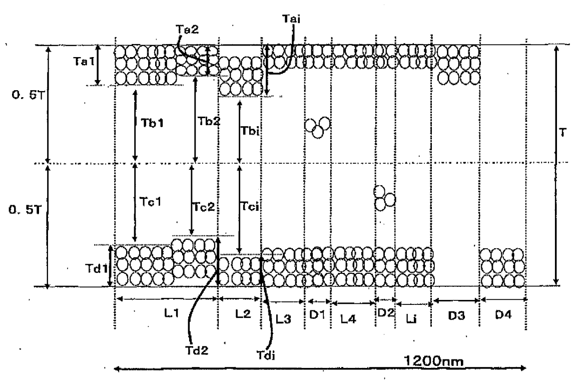


EP 2 657 730 A1

## Description

### TECHNICAL FIELD

The present invention relates to a film containing metal oxide particles, a transfer film and a method for producing the same, and a laminate and a method for producing the same.

### BACKGROUND ART

Transparent resins such as acrylic resin and polycarbonate resin are widely used as industrial and architectural materials, etc. In particular, the transparent resins are recently used for the front panels of displays such as a CRT, a liquid crystal TV, and a plasma display, due to the transparency and the impact resistance.

In recent years, the front panels are required to have various functions. An antireflective function may be one of the required functions.

The antireflective function is a function for displaying an image more clearly by reducing light reflecting from the front panels after emission from a fluorescent light etc. in a room.

As a method of giving the antireflective function, there has been proposed a separation film stacked with a layer having the antireflective function on the surface, which is produced by stacking a transfer film, for example, which is formed by sequentially stacking a low-refractive-index layer, a high-refractive-index layer, and an adhesion layer on process paper, onto the surface of the separation film, with the adhesion layer in contact with the separation film, and then by separating the process paper (see Patent Document 1).

However, when the surface of the antireflective layer is stained, the color of the stained portion is remarkably changed, which causes reduction of visibility of the image display member. Accordingly, the surface of the antireflective layer is required to have stain resistance in recent years.

Under those circumstances, for example, an antireflective transfer film sequentially stacked with a release layer, a stain-resistant functional layer, an antireflective layer, and an adhesion layer on one side of a plastic film has been proposed, and a laminate sequentially stacked with the antireflective layer and the stain-resistant layer on the surface of to-be-printed object can be obtained by stacking the transfer film onto the to-be-printed object such as a base material and then by separating the release layer and the plastic film (see Patent Document 2). However, the laminate has a problem in that when the difference in refractive index between the high-refractive-index layer and the adhesion layer is large, light reflects from the interface between the high-refractive-index layer and the adhesion layer, and accordingly, an interference pattern is generated and the external appearance is deteriorated.

In order to solve the problems in the laminate, a technology of suppressing generation of an interference pattern by suppressing interface reflection, for example, by providing a primer layer having a middle refractive index on the interface where interface reflection is generated has been disclosed (see Patent Document 3). However, there is no mention about a detailed method for using the technology for the antireflective transfer film, for example. Further, there is a problem in that it is difficult to sufficiently suppress the generation of an interference pattern on the primer layer disclosed in the document.

### Citation List

#### Patent Literature

Patent Literature 1: JP 2004-310135 A
Patent Literature 2: JP 2003-103680 A
Patent Literature 3: JP 2004-345333 A

### DISCLOSURE OF THE INVENTION

#### Problems to be Solved by the Invention

An object of the invention is to provide a transfer film that has excellent stain resistance, antireflection, transparency, sweat resistance, and scratch resistance and can provide a laminate with an interference pattern suppressed, and a laminate with an interference pattern suppressed, which has excellent stain resistance, antireflection, transparency, sweat resistance, and scratch resistance.

Another object of the present invention is to provide a film containing metal oxide particles which is appropriate

to obtain the transfer film and the laminate.

Means for Solving the Problems

The invention is a film containing metal oxide particles including a central region without a metal oxide particle, a surface-layer region (a1) with metal oxide particles at one side of the central region, and a surface-layer region (a2) with metal oxide particles at the other side of the central region (First invention).

Further, the invention is a transfer film formed by stacking a low- refractive- index film having a refractive index (Nx), a high- refractive- index film having a refractive index (Ny), and a medium- refractive- index film having a refractive index (Nz) in this order, on one side of a separation film, in which the refractive indices are measured by a laser having a wavelength of 594 nm and satisfy following Formula (5), and the medium- refractive- index film is the film containing metal oxide particles (Second invention) .

$$Nx < Nz < Ny \quad (5)$$

Further, the invention is a method for producing a transfer film which is formed by stacking a low- refractive-index film having a refractive index (Nx), a high- refractive- index film having a refractive index (Ny), and a film containing metal oxide particles that is a medium- refractive- index film having a refractive index (Nz) in this order, on one side of a separation film, in which the refractive indices are measured by a laser having a wavelength of 594 nm and satisfy above Formula (5) . The method includes stacking the high- refractive- index film after stacking the low- refractive- index film on one side of the separation film, applying a composition for a film containing metal oxide particles, which contains metal oxide particles and a diluting solvent containing 20% by weight or more of a solvent having a volatilization speed of 100 or less, onto the surface of the high- refractive- index film, drying the diluting solvent at a temperature of 140°C or less, and stacking the medium- refractive- index film (Third invention) .

Further, the invention is a laminate (A) stacked with a film containing metal oxide particles directly at least on one side of a base material or with another layer therebetween (Fourth invention) .

Further, the invention is a laminate (B) that is formed by stacking a medium- refractive- index film having a refractive index (Nz), a high- refractive- index film having a refractive index (Ny), and a low- refractive- index film having a refractive index (Nx) in this order, directly at least on one side of a base material or with another layer therebetween, in which the refractive indices are measured by a laser having a wavelength of 594 nm and satisfy above Formula (5), and the medium- refractive- index film is the film containing metal oxide particles (Fifth invention) .

Further, the invention is a method for producing the laminate (A) which is obtained by applying a composition for a film containing metal oxide particles, which contains metal oxide particles and a diluting solvent containing 20% by weight or more of a diluting solvent having a volatilization speed of 100 or less, onto the surface of a base material, drying the diluting solvent at a temperature of 140°C or less, and stacking a film containing metal oxide particles (Sixth invention) .

Further, the invention is a method for producing a laminate (B) that is formed by stacking a medium-refractive-index film having a refractive index (Nz), a high-refractive-index film having a refractive index (Ny), and a low-refractive-index film having a refractive index (Nx) in this order, directly at least on one side of a base material or with another layer therebetween, in which the refractive indices are measured by a laser having a wavelength of 594 nm and satisfy above Formula (5). The method includes a process of forming a transfer film laminate substance by bonding the base material and the side of the medium-refractive-index film of a transfer film with a coated film for forming an adhesion layer therebetween, a process of forming a transfer film laminate by obtaining an adhesion layer from the coated film for forming the adhesion layer, and a process of forming a laminate (B) by separating a separation film from the transfer film laminate (Seventh invention).

Effects of the Invention

According to the invention, it is possible to obtain a laminate (A) including a film containing metal oxide particles, which can be regulated to various refractive indices, and having excellent scratch resistance. The laminate (A) is appropriate for the front panel of devices etc. required to have antireflection.

Further, according to the invention, it is possible to obtain a laminate (B) having excellent stain resistance, antireflection, transparency, sweat resistance, and scratch resistance, with an interference pattern suppressed. The laminate (B) is appropriate for an image display member used at the outdoor, or the front panels of mobile phones, portable information terminals, and notebook type PCs etc., that are easily stained with fingerprints, sebum, and foundation etc.

## BRIEF DESCRIPTION OF DRAWINGS

Fig. 1 is a cross-sectional view of an example of a film containing metal oxide particles of the present invention, seen in the thickness direction.

## DESCRIPTION OF EMBODIMENTS

The present invention is described in detail hereinafter.

### Metal Oxide Particles

Metal oxide particles used in the invention (hereinafter referred to as "MO particles") are ones contained in an MO particle-containing film, which is described below.

Examples of the MO particles include tin oxide, antimony-doped tin oxide (ATO), indium oxide, tin-doped indium oxide (ITO), zinc oxide, aluminum-doped zinc oxide, zinc antimonite, and antimony pentoxide.

Further, for the MO particles, in accordance with the purpose, particles of which the surface is individually treated with a surface preparation agent such as a hydrolyzable silane compound etc. may be used. The individual treatment means to react the MO particles with only the surface preparation agent such as a hydrolyzable silane compound etc., which means treating the surface of MO particles in a state in which compounds other than a catalyst, which contributes to hydrolysis, condensation reaction of acid and base etc., are not contained.

When the hydrolyzable silane compound is reacted with the surface of the MO particles, it is preferable that the blend ratio of MO particles to the sum of the hydrolyzable silane compound and the MO particles be 20 to 80% by weight, in terms of scratch resistance and antireflective performance of the surface of a laminate.

### Central Region of Film

In the invention, a central region is the region without MO particles in the combined region of Tb1 and Tc1, the combined region of Tb2 and Tc2, and the combined region of Tbi and Tci, which are in the central region of an MO particle-containing film, as illustrated in Fig. 1.

Further, Tb1, Tb2, Tbi, Tc1, Tc2, and Tci indicate the thickness of the central region from the center of the MO particle-containing film to the interface between the surface-layer region and the central region. Tbi and Tci each indicate one region defining the i-th central region.

### Surface-layer Region (a1) and Surface-layer Region (a2)

In the invention, the surface-layer region (a1) and the surface-layer region (a2) are regions with MO particles in the regions formed on the sides of the central region.

In the surface-layer region (a1) or the surface-layer region (a2), as a filling status of MO particles, there are a status in which particles are densely filled, like the region Ta1, Ta2, Td1, or Tdi in Fig. 1 and a status having a space not filled with particles in the surface-layer region (a1) or the surface-layer region (a2), like the region Tai or Td2 in Fig. 1.

Further, Ta1, Ta2, Tai, Td1, Td2, and Tdi indicate the thicknesses of the surface- layer region (a1) and the surface- layer region (a2) . Tai and Tdi each indicate one region of the i- th surface- layer region (a1) and the i- th surface-layer region (a2) .

### Film containing metal oxide particles (MO particle-containing film)

### MO Particle-containing Film

The MO particle-containing film is an MO particle-containing film having a central region, in which the surface-layer region (a1) is formed on one side of the central region and the surface-layer region (a2) is formed on the other side of the central region.

In the invention, as the MO particle-containing film, in terms of suppressing an interference pattern of a laminate (B), as illustrated in Fig. 1, it is preferable that the thicknesses (Tbi and Tci) of the central region, the thickness (Tai) of the surface-layer region (a1), and the thickness (Tdi) of the surface-layer region (a2) satisfy the following equations (1) to (4), and in the cross-section in the thickness direction of the MO particle-containing film, the total length (L) of the lengths (Li) of the central region is 240 nm or more in a of 1,200 nm perpendicular to the film thickness-direction of the

MO particle-containing film in the thickness-direction cross-section.

$$0.1T \leq Tbi \leq 0.4T \quad (1)$$

$$Tai = 0.5T - Tbi \quad (2)$$

$$0.1T \leq Tci \leq 0.4T \quad (3)$$

$$Tdi = 0.5T - Tci \quad (4)$$

T is the thickness of the MO particle-containing film.

Further, it is possible to observe the structure of the thickness- direction cross- section of the MO particle-containing film with a transmission electron microscope, from the cross- section obtained by randomly cutting the thickness- direction cross- section of the laminate (A) or the laminate (B) .

In the invention, at the portion of the medium-refractive-index film taken by a transmission electron microscope in the cross-section obtained by randomly cutting the thickness-direction cross-section of the laminate (B), it is possible to calculate the total length of the central region without an MO particle in a certain length of 1,200 nm perpendicular to the film thickness-direction of the MO particle-containing film in the thickness-direction cross-section. Further, it is possible to measure the ranges of the thicknesses (Tbi and Tci) of the central region, the thickness (Tai) of the surface-layer region (a1), and the thickness (Tdi) of the surface-layer region (a2) from the center of the MO particle-containing film to the interfaces between the surface-layer regions (a1 and a2) and the central region.

Separation Film

The separation film used in the invention may be, for example, an active energy ray transmission film formed by stacking a transfer film onto the surface of a base material described below and then removing it. Further, the separation film may be used as a base material for directly forming the MO particle-containing film and forming the laminate (A).

In the invention, a laminated film having a separation layer on the surface may be used as the separation film.

As the separation film, an active energy ray transmission film having critical surface tension of 40 mN/m or more, on the surface of the separation film or the separation layer is preferable in terms of achieving good film forming performance without a defect such as cissing (a phenomenon where a base is exposed through a portion of a coated film) when forming a coated film of an MO particle-containing film composition by applying the MO particle-containing film composition to the surface.

Further, as the separation film, an active energy ray transmission film having critical surface tension of 40 mN/m or more, on the surface of the separation film or the separation layer is preferable in terms of achieving good film forming performance without a defect such as cissing (a phenomenon where a base is exposed through a portion of a coated film) when forming a low- refractive- index film by applying a composition for a low- refractive- index film (hereinafter, referred to as an "LRM composition") for forming a low- refractive- index film on the surface of the separation film.

Further, in the invention, the critical surface tension can be calculated by Zisman plot. That is, the contact angles ($\theta$) between various reference solutions having different surface tensions and the surface of a film are measured by dropping the reference solution-reference solutions to the surface of the film. The values of $\cos\theta$ calculated from the obtained contact angles ($\theta$) and the values of the surface tensions are plotted on an XY-coordinate graph and the value of a surface tension at the intersection of the line connecting the obtained plot (Zisman plot) and the line constructed by $\cos\theta = 1$ is selected as the critical surface tension.

As a specific example of the separation film, synthetic resin film such as polyethylene terephthalate film (hereinafter, referred to as "PET film"), polycarbonate film, polyamide film, and polyamide-imide film, composition film substance or composition sheet substance of those films, and films formed by stacking a separation layer on them may be exemplified.

In the films, aromatic polyester film represented by PET film, polyethylene naphthalate (PEN) film(, polybutylene terephthalate (PBT) film, polybutylene naphthalate (PBN) film, and poly trimethylene terephthalate (PTT) film is preferable, and in those films, the PET film and the PEN film are more preferable.

It is possible to increase a water contact angle or a triolein contact angle on the surface of a laminate exposed after transferring by forming a low-refractive-index film directly on the surface of the films, even using a compound with a small content of monomer (A) (hereinafter, referred to as "monomer (A)") which contains a perfluoropolyether group and nitrogen atoms as an LRM composition described below. As a result, it is possible to add a large amount of components improving scratch resistance into the LRM compound, and accordingly, the scratch resistance of the surface of the laminate can become good.

Though not specifically limited, the thickness of the separation film is preferably 4 μm or more, more preferably 12 μm or more, and further more preferably 30 μm or more, in terms of easiness of manufacturing a transfer film or forming an MO particle-containing film without wrinkles and cracks etc. Further, the thickness of the separation film is preferably 500 μm or less, more preferably 150 μm or less, and further more preferably 120 μm or less in terms of the cost and the ultraviolet transmittance.

When the detachability of the low-refractive-index film from the surface of the separation film is low, a separation layer may be provided on the surface of the separation film.

As the separation layer-forming material when a separation layer is formed on the surface of the separation film, known polymer or wax etc. that forms a separation layer can be appropriately selected and used.

As a method of forming the separation layer, a method of forming a separation layer by applying, drying, or hardening a pigment, which is made by dissolving melamine- based, urea- based, urea- melamine- based, and benzoguanamine- based resin etc. and a surfactant into organic diluting solvent or water, on the surface of a separation film by known printing techniques such as gravure printing, screen printing, and offset printing may be exemplified.

The thickness of the separation layer is generally 0.1 to 3 μm. When the separation layer has an appropriate thickness, it can be easily separated from the low-refractive-index film. In contrast, when the separation layer is not too thick, the low-refractive-index film is difficult to be separated from the separation film before transferring.

Low-Refractive-Index Film

In the invention, the low-refractive-index film is a layer formed on the surface of the separation film or the surface of the laminate of a transfer film described below and is provided for implementing an antireflective function.

The film thickness of the low-refractive-index film is preferably 10 nm or more and more preferably 60 nm or more in terms of the scratch resistance and antireflective performance of the surface of the laminate. Further, the film thickness is preferably 300 nm or less and more preferably 110 nm or less in terms of optical characteristics.

It may be preferable that the refractive index of the low-refractive-index film be lower than that of the film on the underside of the low-refractive-index film in the laminate. Further, in the invention, the refractive index is a refractive index measured by a laser with a wavelength of 594 nm.

The refractive index of the low-refractive-index film is preferably 1.5 or less, more preferably 1.45 or less, and further more preferably 1.4 or less in terms of the antireflective performance.

In the invention, as the low-refractive-index film, for example, a film containing inorganic particles and a polymer having units of a monomer (A) containing nitrogen atoms and a perfluoropolyether group may be exemplified.

As the method of forming the low-refractive-index film when obtaining the transfer film, for example, the following method may be exemplified.

First, a coated film of an LRM composition is formed by applying an LRM composition onto the surface of a separation film and then drying the LRM composition. Next, the obtained coated film of an LRM composition is hardened, thereby obtaining a low- refractive- index film.

As the method of applying the LRM composition onto the surface of the separation film, for example, casting, gravure coating, reverse gravure coating, vacuum slot die coating, roller coating, bar coating, spray coating, air knife coating, spin coating, flow coating, curtain coating, film covering, and dipping may be exemplified.

As the method of hardening the coated film of an LRM composition, for example, a heating hardening may be exemplified when the LRM composition is a thermosetting composition, and an active energy ray hardening may be exemplified when the LRM composition is an active energy ray-curable composition.

When the LRM composition is an active energy ray-curable composition, as the active energy ray for hardening the LRM composition, for example, electron rays, radioactive rays, and ultraviolet rays may be exemplified.

As a light source when ultraviolet rays are radiated as the active energy rays, for example, a high-pressure mercury lamp, a metal halide lamp, and a fluorescent ultraviolet lamp may be exemplified. It is preferable to radiate ultraviolet rays under an atmosphere of an inert gas such as nitrogen or argon, because a process pass characteristic is improved by improving surface curability. The oxygen concentration of the atmosphere on the surface of the coated film of an LRM composition is preferably 1,000 ppm or less, more preferably 500 ppm or less, and further more preferably

300 ppm or less.

Further, as the active energy ray hardening condition for hardening the LRM composition, for example, a hardening condition having peak illumination of 100 to 1, 200 mW/cm$^2$ and accumulated light amount of 100 to 1, 200 mJ/cm$^2$ may be exemplified. The balance of the antireflective performance and the scratch resistance is good in this range.

In the invention, although a high-refractive-index film described below is formed after the low-refractive-index film is formed on the surface of the separation film, the low-refractive-index film before the high-refractive-index film is formed not only is formed by completely hardening the LRM composition, but may be a partial hardened material formed by reacting and hardening a portion of the LRM composition, if necessary.

As the LRM composition, for example, at least one selected from a thermosetting LRM composition and an active energy ray-curable LRM composition may be exemplified. Further, it is preferable for the LRM composition to contain a fluorine atom-containing-curable monomer in order to keep the refractive index of the low-refractive-index film at 1.5 or less.

As a specific example of the LRM composition, the following monomer (A) may be exemplified.

As the monomer (A), for example, a monomer (A-1) (hereinafter, referred to as a "monomer (A-1)") containing nitrogen atoms and a perfluoropolyether group obtained by reacting an active hydrogen-containing compound (D) with triisocyanate (C) (hereafter, referred to as "triisocyanate (C)") produced by trimerizing diisocyanate may be exemplified.

As the diisocyanate used for obtaining triisocyanate (C), for example, diisocyanate in which isocyanate group, such as hexamethylene diisocyanate, isophorone diisocyanate, xylylene diisocyanate, hydrogenerated xylylene diisocyanate, and dicyclohexyl methane diisocyanate, is bonded to an aliphatic skeleton, and diisocyanate in which isocyanate group such as tolylene diisocyanate, diphenylmethane diisocyanate, and naphthalene diisocyanate is bonded to an aromatic skeleton may be exemplified.

As the active hydrogen- containing compound (D), for example, a compound containing active hydrogen such as hydroxyl group may be exemplified. As a specific example of the active hydrogen- containing compound (D), perfluoropolyether (D- 1) having one active hydrogen (hereinafter, referred to as "polyether (D- 1) ") and a monomer (D- 2) having an active hydrogen and double bond of carbon- carbon (hereinafter, referred to as "monomer (D- 2) ") may be exemplified.

As the polyether (D-1), for example, a compound having a perfluoropolyether group and one hydroxyl group at one molecular end may be exemplified. As a specific example of the polyether (D-1), a compound represented by the following structural formula (2) may be exemplified.

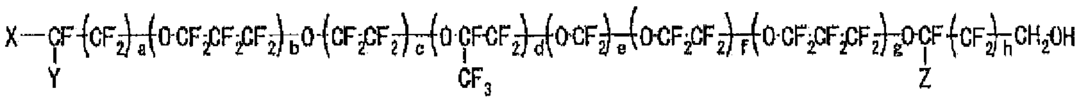 (2)

(where X is fluorine atom, Y and Z are foluorine atom or trifluoromethyl group. a is an integer of 1 to 16, c is an integer of 1 to 5, b, d, e, f, and g are integer of 0 to 200, and h is an integer of 0 to 16.)

In the structural formula (2), when the values of a to h are not too large, the molecular weight value is not too large and dissolution in a diluting solvent etc. becomes good. When the value is not too small, the stain resistance of the laminate becomes good.

As the monomer (D- 2), for example, 2- hydroxyl ethyl (meth) acrylate, 2- hydroxy propyl (meth) acrylate, and 2- hydroxy butyl (meth) acrylate may be exemplified.

Further, in the invention, the "(meth) acrylate" means "acrylate" or "methacrylate". Further, "(meth) acryloyl" or "(meth) acryl" has the same meaning.

As a synthesis method of the monomer (A), for example, it can be obtained by reacting the polyether (D-1) with one isocyanate group of the triisocyanate (C) and reacting the monomer (D-2) with the other two isocyanate groups.

The reaction described above may be obtained by reacting simultaneously or sequentially the polyether (D-1) and the monomer (D-2) with the triisocyanate (C).

As a specific example of the monomer (A-1), a monomer represented by the following structural formula (1) may be exemplified.

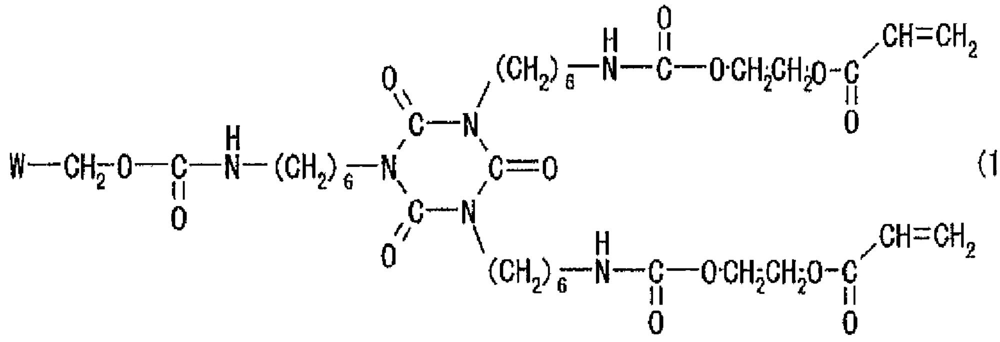

(1)

(where, W is perfluoropolyether group)

The monomer (A) is preferably the monomer represented by the structural formula (1) in terms of good water repellency and oil repellency.

As another example of the monomer (A), a monomer (A-2) obtained by reacting a compound (E) having an isocyanate group and one or two (meth)acryloyloxy groups in the same compound with perfluoropolyether (F) having at least one active hydrogen at the molecular end may be exemplified.

As the perfluoropolyether (F) having at least one active hydrogen at the molecular end, marketed products may be used, and for example, perfluoropolyetherdiol such as FLUOROLINK D10H, FLUOROLINK D, and FLUOROLINK D4000 (they are all trade names) by SOLVAY SOLEXIS, may be exemplified.

As the compound (E) having an isocyanate group and one or two (meth)acryloyloxy groups in the same compound, marketed products can be used, and for example, Karentz BEI (1,1-bis (acryloyl oxymethyl) ethyl isocyanate), Karentz AOI (2-acryloyloxyethyl isocyanate), and Karentz MOI (2-methacryloyloxyethyl isocyanate) (they are all trade names) by SHOWA DENKO K.K may be exemplified.

As the compound (A-2), for example, a compound that can be obtained by bonding the isocyanate group of the compound (E) and the hydroxyl group of the compound (F) and has one perfluoropolyether group and one or two (preferably two) vinyl group or (meth)acryloyloxy group, which are independent groups, in one molecule may be exemplified. The "independent" means that the perfluoropolyether group and the (meth)acryloyloxy group are not directly bonded.

As the content of the monomer (A) contained in the LRM composition, in the in 100 parts by weight of solid content of the LRM composition, 10 parts by weight or more is preferable and 12 parts by weight or more is more preferable. Further, as the content of the monomer (A), 50 parts by weight or less is preferable and 30 parts by weight or less is more preferable. When the contents are in the above ranges, the water repellency, oil repellency, and hardness of the surface of the laminate become good. That is, the water contact angle on the surface of the exposed low-refractive-index film of the laminate can be 90 degrees or more, such that the triolein contact angle can be 55 degrees or more. The solid content of the LRM composition means the components except the diluting solvent in the LRM composition.

In the invention, it is preferable that the LRM composition contain inorganic particles (B) in terms of good water repellency, oil repellency, and hardness and good antireflective performance of the surface of the laminate. It is preferable that the content of the inorganic particles (B) in the LRM composition is 25 to 90 parts by weight.

In the invention, the "particles" of the inorganic particles (B) are particles of which the average particle diameter is 1 to 200 nm. Further, the average particle diameter means a value measured by a grain size distribution measurer SALD-7100 (trade name, by Shimadzu Corporation).

As a specific example of the inorganic particles (B), low-refractive-index particles such as colloidal silica, porous silica, hollow silica, magnesium fluoride, and cryolite may be exemplified. Among these, it is preferable to use low-refractive-index particles having a refractive index of 1.5 or less in the inorganic particles (B). Further, as described below, the silica particle is preferable in terms of easy hydrolysis treatment on the surface of the inorganic particles (B), and the hollow silica is more preferable in terms of a low refractive index, easy reduction of reflectance, and good water repellency and oil repellency of the surface of the laminate.

The refractive index of the hollow silica is 1.20 to 1.40, which is lower than the refractive index of 1.45 to 1.47 of common silica. Accordingly, it is preferable to use the hollow silica in order to reduce the refractive index of the low-refractive-index film in the invention.

As the inorganic particles (B), it is preferable to individually apply a surface preparation agent such as hydrolyzable silane compound to the particle surfaces in terms of good water repellency and oil repellency of the surface of the laminate and improvement of strength of the low-refractive-index film. The individual treatment means to react the inorganic particles (B) with only the surface preparation agent such as a hydrolyzable silane compound, which means treating the surface of inorganic particles (B) in a state in which compounds other than a catalyst, which contributes to hydrolysis, condensation reaction of acid and base etc., are not contained.

As the blend ratio when the hydrolyzable silane compound is applied to the surface of the inorganic particles (B), preferably, 30% by weight or more inorganic particles are in the total weight of the inorganic particles and the hydrolyzable silane compound, and 40% by weight or more is more preferable, in terms of water repellency, oil repellency, scratch resistance, and sweat resistance of the surface of the laminate. Further, 80% by weight or less is preferable and 70% by weight or less is more preferable.

As the hydrolyzable silane compound, for example, 3- (meth) acryloyloxypropyl trimethoxysilane, 3- (meth) acryloyloxypropyl methyldimethoxysilane, 3- (meth) acryloyloxypropyl methyldiethoxysilane, 3- (meth) acryloyloxypropyl triethoxysilane, p- styryl trimethoxysilane, 2- (3, 4- epoxycyclohexyl) ethyl trimethoxysilane, 3- glycidoxypropyl trimethoxysilane, and 3- glycidoxypropyl methyldiethoxysilane may be exemplified.

As the surface preparation agent, compounds other than the hydrolyzable silane compound may also be added. For example, as compounds other than the hydrolyzable silane compound, for example, known surfactants such as an anionic surfactant, a non-ionic surfactant, and a cationic surfactant may be exemplified.

When the monomer (A) is contained as the LRM composition, the monomer (A) has unsaturated bond, such that it is preferable that the hydrolyzable silane compound have unsaturated bond in terms of good water repellency and oil repellency of the low-refractive-index film of the surface of the laminate.

In the invention, a compound having at least two (meth)acryloyl groups (hereinafter, referred to as an "LRM cross-linked component") in the molecule may be added in the LRM composition, if necessary.

As the content of the LRM cross-linked component in the LRM composition, 0 to 30 parts by weight in 100 parts by weight of the solid content of the LRM composition is preferable in terms of the scratch resistance of the surface of the laminate.

As the LRM cross-linked component, for example, an ester derivative obtained from 1 mole of polyalcohol and 2 moles or more of (meth)acrylic acid or derivative thereof and an ester derivative obtained from polycarboxylic acid or the anhydride thereof and polyalcohol and (meth)acrylic acid or the derivative thereof may be exemplified.

Specific examples of an ester derivative obtained from 1 mole of a polyalcohol and 2 moles or more of (meth) acrylic acid and a derivative thereof may include polyethylene glycol di (meth) acrylate such as diethylene glycol di (meth) acrylate, triethylene glycol di (meth) acrylate, and tetraethylene glycol di (meth) acrylate; alkyldiol (meth) acrylates such as 1, 4- butanediol di (meth) acrylate, 1, 6- hexanediol di (meth) acrylate, and 1, 9- nonanediol di (meth) acrylate; and tri- functional or higher polyol poly (meth) acrylates such as trimethylolpropane tri (meth) acrylate, trimethylol ethane tri (meth) acrylate, pentaglycerol tri (meth) acrylate, pentaerythritol tri (meth) acrylate, pentaerythritol tetra (meth) acrylate, glycerol tri (meth) acrylate, dipentaerythritol tri (meth) acrylate, dipentaerythritol tetra (meth) acrylate, dipentaerythritol penta (meth) acrylate, dipentaerythritol hexa (meth) acrylate, tripentaerythritol tetra (meth) acrylate, tripentaerythritol penta (meth) acrylate, tripentaerythritol hexa (meth) acrylate, and tripentaerythritol hepta (meth) acrylate.

In the ester derivative obtained from the polycarboxylic acid or an anhydride thereof with a polyalcohol and a (meth)acrylic acid or a derivative thereof, examples of the combinations of a polycarboxylic acid or an anhydride thereof with a polalcohol and a (meth)acrylic acid (polycarboxylic acid or an anhydride thereof/polyalcohol/(meth)acrylic acid) include malonic acid/trimethylolethane/(meth)acrylic acid, malonic acid/trimethylolpropane/(meth)acrylic acid, malonic acid/glycerine/(meth)acrylic acid, malonic acid/pentaerythritol/(meth)acrylic acid, succinic acid/trimethylolethane/(meth) acrylic acid, succinic acid/trimethylolpropane/(meth)acrylic acid, succinic acid/glycerine/(meth)acrylic acid, succinic acid/pentaerythritol/(meth)acrylic acid, adipic acid/trimethylolethane/(meth)acrylic acid, adipic acid/trimethylolpropane/(meth) acrylic acid, adipic acid/glycerine/(meth)acrylic acid, adipic acid/pentaerythritol/(meth)acrylic acid, glutaric acid/trimethylolethane/(meth)acrylic acid, glutaric acid/trimethylolpropane/(meth)acrylic acid, glutaric acid/glycerine/(meth)acrylic acid, glutaric acid/pentaerythritol/(meth)acrylic acid, sebacic acid/trimethylolethane/(meth)acrylic acid, sebacic acid/trimethylolpropane/(meth)acrylic acid, sebacic acid/glycerine/(meth)acrylic acid, sebacic acid/pentaerythritol/(meth)acrylic acid, fumaric acid/trimethylolethane/(meth)acrylic acid, fumaric acid/trimethylolpropane/(meth)acrylic acid, fumaric acid/glycerine/(meth)acrylic acid, fumaric acid/pentaerythritol/(meth)acrylic acid, itaconic acid/trimethylolethane/(meth)acrylic acid, itaconic acid/trimethylolpropane/(meth)acrylic acid, itaconic acid/glycerine/(meth)acrylic acid, itaconic acid/pentaerythritol/(meth)acrylic acid, maleic anhydride/trimethylolethane/(moth)acrylic acid, maleic anhydride/trimethylolpropane/(meth)acrylic acid, maleic anhydride/glycerine/(meth)acrylic acid, and maleic anhydride/pentaerythritol/(meth) acrylic acid.

Other examples of the LRM crosslinking component include urethane (meth) acrylate obtained by reacting 3 moles or more of acrylic monomers having activating hydrogen such as 2- hydroxyethyl (meth) acrylate, 2- hydroxypropyl (meth) acrylate, 2- hydroxy- 3- methoxy- propyl (meth) acrylate, N- methylol (meth) acrylamide, N- hydroxy (meth) acrylamide, 15, 3- propanetriol- 1, 3- di (meth) acrylate, and 3- acryloyloxy- 2- hydroxypropyl (meth) acrylate with 1 mole of a polyisocyanate obtained by trimerization of diisocyanates such as trimethylol propane tolylene diisocyanate, hexamethylene diisocyanate, tolylene diisocyanate, diphenylmethane diisocyanate, xylene diisocyanate, 4, 4'- methylene bis (cyclohexylisocyanate), isophorone diisocyanate, and trimethyl hexamethylene diisocyanate; poly[(meth) acryloyl oxyethylene] isocyanurate such as di (meth) acrylate or tri (meth) acrylate of tris (2- hydroxyethyl) isocyanurate; epoxy poly (meth) acrylate; and urethane poly (meth) acrylate.

The LRM cross-linked component may be individually used or two kinds or more of the components may be combined in use.

When the LRM composition is a composition for an active energy ray-curable low-refractive-index film, a photoinitiator may be mixed in the LRM composition.

Examples of the photoinitiator include carbonyl compounds such as benzoin, benzoin methyl ether, benzoin ethyl ether, benzoin isopropyl ether, benzoin isobutyl ether, acetoin, butyroin, toluoin, benzyl, benzophenone, p- methoxybenzophenone, 2, 2- diethoxyacetophenone, α, α- dimethoxy- α- phenylacetophenone, methylphenyl glyoxylate, ethylphenyl glyoxylate, 4, 4'- bis- (dimethylamino) benzophenone, 1- hydroxy- cyclohexyl- phenyl- ketone, and 2- hydroxy-2- methyl- 1- phenylpropan- 1- one; sulfur compounds such as tetramethylthiuram monosulfide and tetramethylthiuram disulfide; and phosphorous compounds such as 2, 4, 6- trimethylbenzoyldiphenyl phosphine oxide, bis (2, 4, 6- trimethylbenzoyl)- phenyl phosphine oxide, and benzoyldiethoxy phosphine oxide.

As the additive amount of the photoinitiator, in terms of hardening due to radiation of ultraviolet rays of the LRM composition, for 100 parts by weight of the solid content of the LRM composition, 0.1 parts by weight or more is preferable, 0.5 parts by weight or more is more preferable, and 1 part by weight or more is further more preferable. Further, as the additive amount of the photoinitiator, in terms of good color tone of the low-refractive-index film, 10 parts by weight or less is preferable and 7 parts by weight or less is more preferable.

When the LRM composition is a composition for a thermosetting low-refractive-index film, a thermosetting agent may be mixed in the LRM composition.

Examples of the thermosetting agent include azo- based polymerization initiators such as 2, 2'- azobis (4-methoxy- 2, 4- dimethylvaleronitrile), 2, 2'- azobisisobutyronitrile, and 2, 2'- azobis- (2, 4- dimethylvaleronitrile) ; and organic peroxide- based polymerization initiators such as lauroyl peroxide, diisopropyl peroxy dicarbonate, benzoyl peroxide, bis (4- t- butylcyclohexyl) peroxydicarbonate, t- butylperoxyneodecanoate, and t- hexyl peroxy pivalate. These may be individually used or two or more kinds may be combined in use.

In the invention, if necessary, various additives such as light stabilizer such as a slip characteristic improver, a leveling agent, an ultraviolet absorber, and HALS may be mixed in the LRM composition. The mixing amount of the additives is preferably 10 parts by weight or less in 100 parts by weight of the solid content of the LRM composition in terms of the transparency of the low-refractive-index film.

In the invention, a diluting solvent may be added to the LRM composition to adjust the solid content concentration in the LRM composition. As the diluting solvent, for example, methyl ethyl ketone, methyl isobutyl ketone, isopropanol, ethanol, 1- metoxy- 2- propanol, and 2, 2, 3, 3- tetrafluoro- 1- propanol may be exemplified.

The solid content concentration of the LRM composition is preferably 0.1 to 20% by weight. As the solid content concentration of the LRM composition is set in the range described above, it is possible to obtain good storage stability of the LRM composition, such that controlling to a desired film thickness is easy.

In the invention, although a high-refractive-index film described below is formed after the low-refractive-index film is formed on the surface of the separation film, the low-refractive-index film before the high-refractive-index film is formed not only is formed by completely hardening the LRM composition, but may be a partial hardened material formed by reacting and hardening a portion of the LRM composition, if necessary.

High-Refractive-Index Film

In the invention, the high-refractive-index film is a layer formed between the low-refractive-index film and the medium-refractive-index film in a transfer film or between the low-refractive-index film and the medium-refractive-index film in a laminate (B), for implementing an antireflective function.

It is preferable that the film thickness (dy) of the high-refractive-index film be 0.5 to 10 μm in terms of the scratch resistance and the antireflective performance of the surface of the laminate (B).

It is preferable that the refractive index (ny) of the high-refractive-index film be higher than that of the low-refractive-index film, the medium-refractive-index film, and the adhesion layer in a laminate and satisfy following Formula (8) in terms of suppressing an interference pattern.

$$dy \geq 500 \text{ nm} \quad (6)$$

(in Formula (6), dy represents the thickness of the high- refractive- index film.)

$$90\ \text{nm} \geq dz \geq 30\ \text{nm} \quad (7)$$

(in Formula (7), dz represents the thickness of the medium- refractive- index film.)

$$(nHC \times ny)^{1/2} - (ny - nHC)/8 \leq nz \leq (nHC \times ny)^{1/2} + (ny - nHC)/8 \quad (8)$$

(in Formula (8), nHC represents the refractive index of the formed adhesion layer, ny represents the refractive index of the high- refractive- index film, and nz represents the refractive index of the medium- refractive- index film.)

The refractive index (ny) of the high-refractive-index film is preferably 1.6 or more and more preferably 1.7 or more.

As a method of forming the high-refractive-index film, for example, the following methods may be exemplified.

First, a coated film of an HRM composition is formed by applying a composition for a high- refractive- index film for forming a high- refractive- index film (hereinafter, referred to as an "HRM composition") to the surface of the low-refractive- index film stacked on the surface of a separation film. Further, a coated film of an HRM composition may be formed by volatilizing a diluting solvent in a case where a diluting solvent is contained in the HRM composition. Next, the obtained coated film of an HRM composition is hardened, thereby forming a high- refractive- index film.

As a method of applying the HRM composition to the surface of the low-refractive-index film, a method similar to the method of applying the LRM composition to the surface of the separation film may be exemplified.

As the method of hardening the coated film of an HRM composition, for example, a heating hardening may be exemplified when the HRM composition is a thermosetting composition, and an active energy ray hardening may be exemplified when the HRM composition is an active energy ray-curable composition.

For the method and hardening conditions of hardening active energy rays when the HRM composition is an active energy ray-curable composition, a light source when ultraviolet rays are radiated as active energy rays includes, for example, a high-pressure mercury lamp, a metal halide lamp, and a fluorescent ultraviolet lamp.

Further, as the active energy ray hardening condition for hardening the HRM composition, for example, a hardening condition having peak illumination of 200 to 1, 000 $mW/cm^2$ and accumulated light amount of 400 to 1, 200 $mJ/cm^2$ may be exemplified, with air existing. In this range, the balance of adhesion, scratch resistance, and the external appearance after a humidity resistance test is good. In a case where the energy of the active energy ray when the HRM composition is hardened is too low and a humidity resistance test is carried out such that the composition is left under a hot and humid environment, for example, under an environment of 80°C and 85% for 24 hours or more, a white bleed substance such as powder is generated on the surface of the laminate (B), such that the external appearance may be deteriorated.

In the invention, in a case where the coated film of the HRM composition is hardened, if necessary, it is possible to harden a partial hardened material of the LRM composition too.

In the invention, although a medium-refractive-index film described below is formed after the high-refractive-index film is formed on the surface of the low-refractive-index film, the high-refractive-index film before the medium-refractive-index film is formed not only is formed by completely hardening the HRM composition, but may be a partial hardened material formed by reacting and hardening a portion of the HRM composition, if necessary.

In the invention, when the coated film of the HRM composition is formed on the surface of the low-refractive-index film, in order to improve the interface strength of the low-refractive-index film and the high-refractive-index film and to make the scratch resistance of the laminate good, it is preferable to obtain a high-refractive-index film after applying the HRM composition, after performing hydrophilic treatment such as ultraviolet ray radiation, electron ray radiation, heating treatment, applying of an oxidation material, corona treatment, and plasma treatment on the surface of the low-refractive-index film. As the hydrophilic treatment, the corona treatment and the plasma treatment are more preferable in terms of good scratch resistance of the laminate (B).

As a method of the corona treatment, for example, a method of performing the treatment, using a common corona treatment device may be exemplified. An example of the corona treatment is described below.

Using a corona treatment device composed of an electric insulated belt and electrodes disposed close above the belt, corona treatment is performed on the low-refractive-index film by generating corona discharge by applying high energy to the corresponding electrode, and by passing a separation film having a low-refractive-index film with the low-refractive-index film side as the surface on the belt, under the electrodes.

The energy radiated to the separation film with the low-refractive-index film is preferably 10 to 200 W·min/m.

It is possible to improve adhesion between the low-refractive-index film and the high-refractive-index film by setting the radiation energy at 10 W·min/m or more. Further, it is possible to improve the external appearance of the low-refractive-index film by setting the radiation energy at 200 W·min/m or less. Further, the clearance between the electrodes and the separation film with the low-refractive-index film is preferably 5 mm or less for stable corona discharge.

Although a common plasma treatment device may be used for the plasma treatment, an atmospheric pressure plasma device is preferable for the simple operation.

As the plasma treatment method, for example, a remote method and a direct method may be exemplified, but the direct method is preferable because uniform treatment can be achieved.

As an example of the atmospheric plasma treatment device, a device having a pair opposite electrodes composed of an upper electrode and a lower electrode in a processing chamber and in which the opposite side of at least one electrode is coated with a dielectric may be exemplified.

In the device, the portion where plasma is generated is in between the dielectric and the electrode when only any one of the opposite electrodes is coated with a dielectric, and is in between the dielectrics when the opposite electrodes are coated with a dielectric. Plasma treatment is performed on the surface of the low-refractive-index film by disposing a film with a low-refractive-index film between the opposite electrodes of the plasma treatment device, and generating plasma between the opposite electrodes by applying high-frequency power to the power unit.

The distance (the shortest distance) between the opposite sides of the opposite electrodes is determined in consideration of the thickness of the separation film where the low-refractive-index film to be processed is stacked, the thickness of the coated dielectric, and the magnitude of the voltage to be applied, but it is preferable that the distance be 50 mm or less, when only one of the opposite electrodes is coated with a dielectric or when both of the opposite electrodes are coated with the dielectric. When the shortest distance is 50 mm or less, it is possible to generate uniform discharge plasma.

It is preferable that the frequency of the high-frequency power applied between the opposite electrodes be 1 kHz or more. Further, as the frequency of the high-frequency power applied between the opposite electrodes, 10 MHz or less is preferable and 500 kHz or less is more preferable.

It is preferable that the power density be 2.0 to 30.0 W/cm$^2$. For the frequency of 1 to 500 kHz, deformation or deterioration at the time of treating the separation film in which the low-refractive-index film is stacked are suppressed.

Further, for the power density of 30.0 W/cm$^2$ or less, it is possible to suppress deformation of the separation film with the low- refractive- index film stacked, due to radiation heat of plasma.

Further, in the invention, the power density means a value obtained by dividing the power applied between a pair of opposite electrodes by the surface area of one electrode being in contact with plasma.

As the HRM composition, for example, a thermosetting high-refractive-index composition and an active energy ray-curable high-refractive-index composition may be exemplified.

As a specific example of the HRM composition, a composition containing a compound having at least two (meth)acryloyloxy groups (hereinafter, referred to as an "HRM cross-linked component") may be exemplified.

As the HRM cross-linked component, the LRM cross-linked component may be exemplified.

In order to obtain a laminate with excellent scratch resistance, it is preferable that the HRM composition contain amino silane such as N- 2- (aminoethyl)- 3- aminopropylmethylmethoxy silane, N- 2- (aminoethyl)- 3- aminopropyltrimethoxy silane, and N- 2- (aminoethyl)- 3- aminopropyltriethoxy silane.

As the content of the amino silane in the HRM composition, 1 part by weight or more to 100 parts by weight of the solid content in the HRM composition is preferable in order to obtain good scratch resistance of the laminate, and 30 parts by weight or less is preferable in order to obtain a good antireflective function.

In order to improve the strength of the high-refractive-index film and increase the refractive index of the high-refractive-index film, high-refractive-index MO particles may be added in the HRM composition.

For the high-refractive-index MO particles, the refractive index of 1.55 to 2.0 is preferable. Tin oxide, an antimony-doped tin oxide (ATO), indium oxide, tin-doped indium oxide (ITO), zinc oxide, aluminum-doped zinc oxide, zinc antimonite, and antimony pentoxide are preferable, and a zirconium oxide is more preferable in terms of a high refractive index and good transparency.

As the content of high-refractive-index MO particles in the HRM composition, 20 parts by weight or more to 100 parts by weight of the solid content in the HRM composition is preferable in order to obtain good scratch resistance or antireflective function of the laminate (B), and 80 parts by weight or less is preferable in order to obtain a good antireflective function.

It is preferable to perform surface treatment on the high-refractive-index MO particles, with a compound such as a hydrolyzable silane compound that is used for treating the surface of the inorganic particles (B).

When the hydrolyzable silane compound is reacted with the surface of the high-refractive-index MO particles, it is preferable that the blend ratio of high-refractive-index MO particles to the sum of the hydrolyzable silane compound and the high-refractive-index MO particles be 20 to 80% by weight, in terms of scratch resistance and antireflective performance of the surface of a laminate.

As a method of regulating the refractive index of the high-refractive-index film, for example, a method of changing the mixing ratio of the HRM cross-linked component and the high-refractive-index MO particles may be exemplified. That is, the larger the content of the high-refractive-index MO particles, the more the refractive index of the high-refractive-index film increases, whereas the smaller the content of the high-refractive-index MO particles, the more the refractive index of the high-refractive-index film decreases.

Further, instead of the high- refractive- index MO particles, the refractive index of the high- refractive- index film may be adjusted to a predetermined valve by adding a high- refractive- index organic compound.

As the high-refractive-index organic compound, for example, a compound having sulfur atoms, bromine atoms, and an aromatic skeleton or a fluorene skeleton in molecules may be exemplified.

As the compound having the fluorene skeleton, for example, OGSOL EA200, EA1000, EA-F5003, EA-F5503, and EA-F5510 (they are all trade names) by Osaka Gas Chemicals Co., Ltd. may be exemplified.

As the compound having the aromatic skeleton, for example, NK ESTER A-LEN-10 and NK ESTER ABE-300 (they are all trade names) by SHIN-NAKAMURA CHEMICAL Co. Ltd. may be exemplified.

In the invention, in order to obtain the laminate (B) having excellent scratch resistance, as the HRM composition, a composition containing a monomer having at least two (meth)acryloyloxy groups in molecules, aminosilane, high-refractive-index MO particles, photoinitiators, and diluting solvents is preferable.

In the invention, if necessary, it is possible to give an antistatic function to the high-refractive-index film by adding an antistatic component in the HRM composition.

When the high-refractive-index film is given an antistatic function, the value of the surface resistance of the surface of the laminate (B) is preferably $10^{10}$ Ω/□ or less and more preferably $10^{8}$ Ω/□ or less.

When the HRM composition is a composition for an active energy ray-curable high-refractive-index film, a photoinitiator for an HRM composition may be mixed in the HRM composition.

For the type and the additive amount of the photoinitiator for an HRM composition, the compound and the additive amount of the photoinitiator added in the LRM composition may be used.

When the HRM composition is a composition for a thermosetting high-refractive-index film, a thermosetting agent for an HRM composition may be mixed in the HRM composition.

For the type and the additive amount of the thermosetting agent for an HRM composition, the compound and the additive amount of the thermosetting agent added in the LRM composition may be used.

In the invention, if necessary, various additives such as light stabilizer such as a slip characteristic improver, a leveling agent, an ultraviolet absorber, and HALS may be mixed in the HRM composition. The mixing amount of the additives is preferably 10 parts by weight or less in 100 parts by weight of the solid content of the HRM composition in terms of the transparency of the high-refractive-index film.

In the invention, a diluting solvent may be added to the HRM composition to adjust the solid content concentration in the HRM composition. The diluting solvent may be independently used or they are combined in use.

For the diluting solvent, it is preferable that the dielectric constant be 10.0 or less at 25°C in terms of good storage stability of the HRM composition. By setting the dielectric constant at 10.0 or less, it is possible to obtain the laminate (B) with excellent scratch resistance even using an HRM composition that has been left for a long period of time (for example, 24 hours) at room temperature.

In order to set the dielectric constant of the diluting solvent at 10.0 or less, the dielectric constant of an individual diluting solvent may be 10.0 or less or the dielectric constant of combination of a plurality of diluting solvents may be 10.0 or less. As an individual diluting solvent having a dielectric constant of 10.0 or less, for example, toluene (2.38), xylene (2.41), butyl acetate (5.02), and chloroform (4.9) may be exemplified. Further, as an example of 10.0 or less of dielectric constant of a diluting solvent when a diluting solvent mixture is produced by combining a diluting solvent having a dielectric constant of 10.0 or less and diluting solvent having a dielectric constant of 10.0 or more, a substance obtained by adding toluene of 45% by weight or more in a solvent mixture of toluene and isopropanol may be exemplified.

The solid content concentration of the HRM composition is preferably 5 to 50% by weight. As the solid content concentration of the HRM composition is set in the range described above, it is possible to achieve good storage stability of the HRM composition, such that controlling to a desired film thickness is easy.

Medium-Refractive-Index Film

In the invention, the medium-refractive-index film is a layer formed on the high-refractive-index film or between the high-refractive-index film and the adhesion layer in a transfer film, or formed between the base material and the high-refractive-index film or between another layer of the base material having another layer such as an adhesion layer and the high-refractive-index film in the laminate (B), for suppressing generation of an interference pattern in the use of the laminate (B).

As the film thickness (dz) of the medium-refractive-index film, 30 nm or more is preferable and 40 nm or more is more preferable in terms of suppressing an interference pattern on the surface of the laminate (B). Further, 90 nm or

less is preferable and 80 nm or less is more preferable.

It is preferable that the refractive index (nz) of the medium-refractive-index film satisfy Formula (8) described above in terms of suppressing an interference pattern on the surface of the laminate (B).

It is preferable that the refractive index (nz) of the medium-refractive-index film be 1.5 to 1.65.

As the medium-refractive-index film of the laminate (B), for example, an MO particle-containing film may be exemplified.

When the MO particle-containing film is the medium-refractive-index film, it is preferable that the refractive index of the MO particle-containing film be 1.5 to 1.65.

In the invention, as the medium-refractive-index film, in terms of suppressing generation of an interference pattern of the laminate (B), as illustrated in Fig. 1, it is preferable that the thicknesses (Tbi and Tci) of the central region, the thickness (Tai) of the surface-layer region (a1), and the thickness (Tdi) of the surface-layer region (a2) satisfy the above equations (1) to (4), and in the cross-section in the thickness direction of the MO particle-containing film, for the film thickness of the MO particle-containing film in the cross-section in the thickness direction, the total length (L) of the lengths (Li) of the central region is 240 nm or more, and preferably 480 nm or more in the vertical length of 1,200 nm.

As the composition for a medium-refractive-index film (hereinafter, referred to as an "MRM composition"), for example, at least one selected from a composition for a thermosetting medium-refractive-index film and a composition for an active energy ray-curable medium-refractive-index film may be exemplified.

As a specific example of the MRM composition, a composition containing a compound having at least two (meth)acryloyloxy groups (hereinafter, referred to as an "MRM cross-linked component") may be exemplified.

As the MRM cross-linked component, the LRM cross-linked component may be exemplified.

In order to improve the strength of the medium-refractive-index film and regulate the refractive index of the medium-refractive-index film, medium-refractive-index MO particles may be added in the MRM composition. As the medium-refractive-index MO particles, MO particles mixed in the HRM composition may be exemplified.

As the content of the medium-refractive-index MO particles of the MRM composition, 15 parts by weight or more is preferable and 20 parts by weight or more is more preferable to the solid content of 100 parts by weight in the MRM composition, with the refractive index of the medium-refractive-index film satisfying Formula (8). Further, as the content of the medium-refractive-index MO particles of the MRM composition, 60 parts by weight or less is preferable and 50 parts by weight or less is more preferable in terms of obtaining the laminate (B) having good transparency.

It is preferable to perform surface treatment on the medium-refractive-index MO particles, with a compound such as a hydrolyzable silane compound that is used for treating the surface of the inorganic particles (B).

For the blend ratio of the compound for the surface treatment when the hydrolyzable silane compound is reacted on the surface of the medium-refractive-index MO particles, in terms of scratch resistance and antireflective performance of the surface of the laminate (B), and in terms of forming an uneven distribution layer structure having a surface-layer region (a1), a central region, and a surface-layer region (a2) in a medium-refractive-index film, as the content of the medium-refractive-index MO particles in the sum of the hydrolyzable silane compound and the medium-refractive-index MO particles, 50% by weight or more is preferable and 60% by weight or more is more preferable. Further, as the content of the medium-refractive-index MO particles in the sum of the hydrolyzable silane compound and the medium-refractive-index MO particles, 80% by weight or less is preferable and 70% by weight or less is more preferable in terms of obtaining the laminate (B) having good transparency.

As the method of regulating the refractive index of the medium-refractive-index film, a method such as method of regulating the refractive index of the high-refractive-index film may be exemplified.

In the invention, if necessary, it is possible to adjust the refractive index of the medium-refractive-index film to a desired value by adding a high-refractive-index organic compound in the MRM composition.

As the high-refractive-index organic compound, for example, a compound having sulfur atoms, bromine atoms, and an aromatic skeleton or a fluorene skeleton in molecules may be exemplified, such that it is preferable in terms of good film forming performance of the MRM composition.

As the compound having the fluorene skeleton, for example, OGSOL EA200, EA1000, EA-F5003, EA-F5503, and EA-F5510 (they are all trade names) by Osaka Gas Chemicals Co., Ltd. may be exemplified.

As the content of the high-refractive-index organic compound in the MRM composition, 30 parts by weight or more is preferable and 40 parts by weight or more is more preferable to the solid content of 100 parts by weight in the MRM composition, with the refractive index of the medium-refractive-index film satisfying Formula (8). Further, as the content of the high-refractive-index organic compound in the MRM composition, 80 parts by weight or less is preferable and 70 parts by weight or less is more preferable in terms of obtaining the laminate (B) having good transparency.

When the refractive index is regulated, using the high-refractive-index organic compound as the MRM composition, it is preferable to add a leveling agent in terms of suppressing a defect such as cissing. As the leveling agent, silicone-based, fluorine-based, and acryl-based leveling agents may be exemplified, but the acryl-based leveling agent is preferable in terms of forming an adhesion layer without cissing. As the acryl-based leveling agent, for example, BYK361N, BYK350, BYK352, BYK354, BYK355, BYK356, BYK358N, BYK380N, BYK381, BYK392, and BYK394 (they

are all trade names) by BYK JAPAN Co., Ltd. may be exemplified.

In the invention, if necessary, it is possible to give an antistatic function to the medium-refractive-index film by adding an antistatic component in the MRM composition.

When the medium-refractive-index film is given an antistatic function, the value of the surface resistance of the surface of the laminate (B) is preferably $10^{10}$ Ω/□ or less and more preferably $10^{8}$ Ω/□ or less.

When the MRM composition is a composition for an active energy ray-curable medium-refractive-index film, it is possible to mix a photoinitiator for an MRM composition in the MRM composition. For the type and the additive amount of the photoinitiator for an MRM composition, the compound and the additive amount of the photoinitiator added in the LRM composition may be used.

When the MRM composition is a composition for a thermosetting medium-refractive-index film, it is possible to mix a thermosetting agent for an MRM composition in the MRM composition. For the type and the additive amount of the thermosetting agent for an MRM composition, the compound and the additive amount of the thermosetting agent added in the LRM composition may be used.

In the invention, if necessary, additives such as light stabilizer such as a slip characteristic improver, a leveling agent, an ultraviolet absorber, and HALS may be mixed in the MRM composition. The mixing amount of the additives is preferably 10 parts by weight or less in 100 parts by weight of the solid content of the medium-refractive-index composition in terms of the transparency of the medium-refractive-index film.

A compound such as aminosilane that can be added to the HRM composition may be added to the MRM composition, if necessary, in terms of obtaining the laminate (B) having excellent scratch resistance.

In the invention, a diluting solvent may be added to the MRM composition to adjust the solid content concentration in the MRM composition.

As the diluting solvent, when medium- refractive- index MO particles are used for the MRM composition, for example, toluene (volatilization speed: 240), butyl acetate (volatilization speed: 100), methylisobutylketone (volatilization speed: 165), 1- methoxy- 2- propanol (volatilization speed: 66), and isopropanol (volatilization speed: 150) may be exemplified; however, in terms of forming an uneven distribution layer structure having a surface- layer region (a1), a central region, and a surface- layer region (a2) in a medium- refractive- index film, as the content of the diluting solvent having a volatilization speed of 100 or less, 20% by weight or more is preferable and 30% by weight or more is more preferable, in the entire diluting solvent. Further, as the content of the diluting solvent having a volatilization speed of 100 or less, 90% by weight or less is preferable and 80% by weight or less is more preferable in terms of increasing the production efficiency, for short- time drying.

The solid content concentration of the MRM composition is preferably 0.4 to 2% by weight. As the solid content concentration of the MRM composition is set in the range described above, it is possible to obtain good storage stability of the MRM composition, such that controlling to a desired film thickness is easy.

As a method of forming the medium-refractive-index film, for example, the following methods may be exemplified.

First, a coated film of a composition for an MO particle- containing film as an MRM composition is formed by applying a composition for the MO particle- containing film to the surface of the high- refractive- index film stacked on the surface of a separation film.

Further, a coated film of an MRM composition may be formed by volatilizing a diluting solvent, when a diluting solvent is contained in the MRM composition. As the temperature for drying the diluting solvent, 50°C or more is preferable and 60°C or more is more preferable in terms of forming the uneven distribution layer structure having a surface-layer region (a1) a central region, and a surface-layer region (a2) in a medium-refractive-index film. Further, the temperature for drying the diluting solvent, 140°C or less is preferable and 120°C or less is more preferable. As the time for drying the diluting solvent, 30 seconds or more is preferable, 1 minute or more is more preferable, and 1 minute and 30 seconds or more is further more preferable in terms of removing the remaining diluting solvent and forming an uneven distribution layer structure in the medium-refractive-index film. Further, as the time for drying the diluting solvent, 5 minutes or less is preferable and 3 minutes or less is more preferable in terms of productivity of a transfer film.

Next, a medium- refractive- index film is obtained by hardening the coated film of the MRM composition.

As a method of applying the MRM composition to the surface of the high-refractive-index film, a method of applying the LRM composition to the surface of the separation film may be exemplified.

As the method of hardening the coated film of an MRM composition, for example, a heating hardening may be exemplified when the MRM composition is a thermosetting composition, and an active energy ray hardening may be exemplified when the MRM composition is an active energy ray-curable composition.

As a method and hardening conditions for active energy ray hardening when the MRM composition is an active energy ray-curable composition, a method and conditions similar to the method and the hardening conditions for hardening by active energy rays of the HRM composition may be exemplified.

In the invention, in a case where the coated film of the MRM composition is hardened, if necessary, it is possible to harden a partial hardened material of the LRM composition or a partial hardened material of the HRM composition too.

In the invention, although a adhesion layer described below is formed, if necessary, after the medium-refractive-index film is formed on the surface of the high-refractive-index film of a transfer film, the medium-refractive-index film before the adhesion layer is formed on the surface of the medium-refractive-index film may be obtained by completely hardening the MRM composition, and if necessary, may be a partial hardened material formed by reacting and hardening a portion of the MRM composition as well.

In the invention, when the coated film of the MRM composition is formed on the surface of the high-refractive-index film, in order to increase the scratch resistance of the laminate by improving the interface strength between the high-refractive-index film and the medium-refractive-index film, discharge treatment such as corona treatment and plasma treatment may be performed on the surface of the high-refractive-index film.

As the method and conditions for the discharge treatment, a method and conditions such as the method and conditions of discharge treatment when forming a high-refractive-index film may be exemplified.

Transfer Film

The transfer film is a laminated film where a low-refractive-index film, a high-refractive-index film, an MO particle-containing film as a medium-refractive-index film, and if necessary, an adhesion layer are stacked in this order, on one side of a separation film.

In the invention, the thickness (dy) of the high-refractive-index film, the thickness (dz) of the medium-refractive-index film, and the refractive index (nHC) of the adhesion layer in the transfer film preferably satisfy above Formulae (6) to (8). By satisfying the conditions, an interference pattern is suppressed and a laminate (B) having excellent scratch resistance on the surface can be obtained.

In the invention, if necessary, it is possible to stack a known protective film on the side not in contact with the separation film of the transfer film.

As a method of producing the transfer film, for example, a method of producing a transfer film where a low-refractive-index film, a high-refractive-index film, and an MO particle-containing film as a medium-refractive-index film are stacked in this order on one side of a separation film may be exemplified.

That is, the transfer film is obtained by stacking the high-refractive-index film after stacking the low-refractive-index film on one side of the separation film, applying a composition for an MO particle-containing film containing MO particles and a diluting solvent containing 20% by weight or more of a diluting solvent having a volatilization speed of 100 or less onto the surface of the high-refractive-index film, and then drying the diluting solvent at a temperature of 140°C or less, thereby stacking the medium-refractive-index film.

Base Material

As the base material used in the invention, for example, a resin base material and an inorganic base material may be exemplified.

As a specific example of the resin base material, methacrylate resin such as polymethyl methacrylate, a copolymer having methyl methacrylate unit as the main component, and a copolymer having alkyl methacrylate unit as the main component, aromatic vinyl monomer unit-containing resin such as polystyrene and stylene-methyl methacrylate copolymer, olefin resin such as cyclic polyolefin, polycarbonate resin (hereafter, referred to as "PC resin") such as polycarbonate, and multilayered materials of polycarbonate and other materials may be exemplified.

As a specific example of the inorganic material, glass may be exemplified.

The base material, if necessary, may contain additives such as a coloring agent and a light diffusing agent. Further, although the base material may be or may not be transparent, preferably, it is transparent in terms of being able to radiate ultraviolet rays from the base material side.

In the invention, the thickness of the base material is not specifically limited, and a film substance or a sheet substance which has a thickness according to the purpose may be selected.

Laminate (A)

The laminate (A) is a laminate formed by stacking an MO particle-containing film directly or with another layer therebetween at least on one side of a base material.

As a method of producing the laminate (A), for example, a method of obtaining the laminate (A) by applying a composition for an MO particle-containing film containing MO particles and a solvent containing 20% by weight or more of a diluting solvent having a volatilization speed of 100 or less onto the surface of a base material, drying the diluting solvent at a temperature of 140°C or less, and stacking an MO particle-containing film may be exemplified.

Further, as another method of producing the laminate (A), for example, the following method may be exemplified.

A laminated film is obtained by applying a composition for an MO particle-containing film containing MO particles and a diluting solvent containing 20% by weight or more of a diluting solvent having a volatilization speed of 100 or less

onto the surface of a separation film, drying the diluting solvent at a temperature of 140°C or less, and stacking an MO particle-containing film. Next, an adhesion layer forming material is formed on the surface of the obtained laminated film and then the adhesion layer forming material and a base material are stacked. Further, a laminate (A) is obtained by separating the separation film after hardening the adhesion layer forming material.

Laminate (B)

The laminate (B) is a laminate formed by stacking a medium-refractive-index film having a refractive index (Nz), a high-refractive-index film having a refractive index (Ny), and a low-refractive-index film having a refractive index (Nx) in this order directly or with another layer therebetween at least on one side of a base material, in which the refractive indices (Nx, Ny, and Nz) satisfy above Formula (5), and the medium-refractive-index film is the MO particle-containing film.
As the thickness of the laminate, 0.2 mm or more is preferable in terms of the mechanical strength of the laminate, and 10 mm or less is preferable in terms of productivity of the laminate.
In the invention, for the laminate, it is preferable that a low-refractive-index film having a triolein contact angle of 55 degrees or more be stacked, with 90 degrees or more of water contact angle of the surface of the low-refractive-index film of the laminate. By having the low-refractive-index film described above, it is possible to obtain a laminate in which stain such as fingerprints, sebum, and foundation is not remarkable.
Further, in terms of obtaining a laminate suppressing remarkable color change of reflective color and deterioration of visibility of the image display member when it is stained, it is preferable to set the water contact angle of the surface of the laminate to 95 degrees or more and the triolein contact angle to 60 degrees or more.
As a method of producing the laminate (B), for example, a method including a process of forming a transfer film laminate substance by bonding the base material and the side of the medium-refractive-index film of a transfer film with a coated film for forming an adhesion layer therebetween (transfer film laminate substance forming process), a process of forming a transfer film laminate by obtaining an adhesion layer from the coated film for forming the adhesion layer (transfer film laminate forming process), and a process of forming a laminate (B) by separating a separation film from the transfer film laminate (laminate (B) forming process) may be exemplified.

Coated Film for Forming an Adhesion Layer

The coated film for forming an adhesion layer is a coated film for forming an adhesion layer described below.
As the coated film for forming an adhesion layer, for example, a thermosetting resin coated film containing thermosetting resin and a curable coated film containing an active energy ray-curable composition may be exemplified.
When the coated film for forming an adhesion layer is a thermosetting resin coated film containing thermosetting resin, as the adhesion layer forming material to be used, for example, a thermosetting resin solution in which thermosetting resin is dissolved in a diluting solvent may be used.
As the diluting solvent for dissolving the thermosetting resin, for example, methylethyl ketone, methylisobutyl ketone, isopropanol, ethanol, 1- methoxy- 2- propanol, and toluene may be exemplified.
As the thermosetting resin for forming the thermosetting resin coated film, for example, acryl-based resin, chlorinated olefin-based resin, vinyl chloride-vinyl acetate-based copolymer, maleate-based resin, chlorinated rubber-based resin, cyclized rubber-based resin, polyamide-based resin, coumarone-indene-based resin, ethylene-vinyl acetate-based copolymer, polyester-based resin, polyurethane-based resin, styrene-based resin, butyral-based resin, rosin-based resin, and epoxy-based resin may be exemplified.
When the coated film for forming an adhesion layer is a curable coated film containing an active energy ray-curable composition, as the adhesion layer forming material, for example, a composition such as an LRM cross-linked component may be used.
The active energy ray-curable compound for the curable coated film may be individually used or two or more kinds of the components may be combined in use.
As a photopolymerization initiator added to the active energy ray-curable compound for the curable coated film, for example, the photoinitiator used in mixing with the LRM composition may be used. These may be individually used or two or more kinds may be combined in use.
As a method of forming a thermosetting resin coated film or a curable coated film containing an active energy ray-curable composition, for example, a method of forming a curable coated film containing a thermosetting resin coated film or an active energy ray-curable composition by applying a thermosetting resin solution or an active energy ray-curable composition onto the surface of the medium-refractive-index film in a transfer film or onto the surface of a medium-refractive-index film or the surface of a base material in a transfer film when stacking a transfer film and the base material, and then by removing a diluting solvent may be exemplified.

Transfer Film Laminate Substance Forming Process

The transfer film laminate substance forming process is a process of forming a transfer film laminate substance by bonding the base material the side of the medium-refractive-index film of the transfer film with a coated film for forming an adhesion layer therebetween.

Examples of methods of forming a transfer film laminate substance when using a thermosetting resin coated film for an adhesion layer and using a curable coated film for an adhesion layer as an adhesion layer are described hereafter.

(1) Thermosetting resin coated film for adhesion layer

When a thermosetting resin coated film for an adhesion layer is used as a coated film for forming an adhesion layer, it is possible to obtain a transfer film laminate substance by bonding a base material and a transfer film with the thermosetting resin coated film for an adhesion layer therebetween in the transfer film laminate substance forming process. The thermosetting resin coated film for an adhesion layer may be disposed in advance on the transfer film or the base material.

As a method of forming the thermosetting resin coated film for an adhesion layer, for example, a method of forming a thermosetting resin coated film for an adhesion layer by applying the thermosetting resin solution onto the side of a medium-refractive-index film of a transfer film or the surface of a base material and then removing the solvent may be exemplified.

As a method of applying the thermosetting resin solution when using the thermosetting resin solution, for example, a method similar to the method of applying an LRM composition may be used.

(2) Curable coated film containing active energy ray-curable composition

When a curable coated film for an adhesion layer is used as a coated film for forming an adhesion layer, a transfer film laminate substance is obtained by bonding a base material and a transfer film with the curable coated film for an adhesion layer therebetween in the transfer film laminate substance forming process. The curable coated film for an adhesion layer may be disposed in advance on the transfer film or the base material.

In order to prevent air from being included when stacking a base material and a transfer film, it is preferable to stack them with a curable coated film for an adhesion layer formed, using a material for forming an excessive amount of curable coated film for an adhesion layer.

As a method of applying an active energy ray-curable composition for forming the curable coated film for an adhesion layer, for example, a method similar to the method of applying the LRM composition may be exemplified.

As a method of stacking the base material and the transfer film, for example, a method of pressing them with a rubber roll may be exemplified. The pressing may be performed under the condition of 5 to 15 MPa, for example. Further, it is preferable to heat the surface of the base material to stack at 40 to 125°C in terms of adhesion with the transfer film.

Adhesion Layer

In the invention, the adhesion layer is provided for bonding the transfer film and the base material.

In the invention, the adhesion layer may be formed, when it is stacked on the surface of the medium-refractive-index film as a transfer film and then embedded therein and when the adhesion layer is formed between a transfer film and a base material in stacking of the transfer film and the base material.

In those cases, it is preferable that the refractive index of the adhesion layer satisfy Formula (8) described above in terms of suppressing an interference pattern on the laminate (B). It is preferable that the refractive index (nHC) of the adhesion layer be 1.45 to 1.56.

Further, when the refractive index difference between the base material and the adhesion layer is large and a clear refractive interface exists, light reflects from the interface between the base material and the adhesion layer, which causes a new interference pattern. Therefore, in order to remove the refractive interface between the base material and the adhesion layer, it is preferable to put the adhesion layer sufficiently into the base material or suppress the refractive index difference between the base material and the adhesion layer to 0.03 or less.

In the invention, as a method of forming the adhesion layer, a method of obtaining an adhesion layer by volatilizing a diluting solvent, using a known method, may be exemplified, for example, when using a thermosetting resin solution produced by dissolving thermosetting resin in a diluting solvent as the adhesion layer forming material. Further, for example, when an active energy ray-curable composition diluted by a diluting solvent is used as the adhesion layer forming material, a method of volatilizing the diluting solvent, using a known method, and then hardening it under the

same conditions as in the active energy hardening when hardening the HRM composition may be exemplified.

Further, in the invention, when forming an adhesion layer, using an active energy ray- curable composition, if necessary, it is possible to harden at least one of a partial hardened material of an LRM composition, a partial hardened material of an HRM composition, and a partial hardened material of the MRM composition, simultaneously with hardening the coated film for forming an adhesion layer.

Transfer Film Laminate Forming Process

In the invention, the transfer film laminate forming process is a process for obtaining an adhesion layer from a coated film for forming an adhesion layer.

Examples of methods of forming a transfer film laminate when using a thermosetting resin coated film and using a curable coated film for an adhesion layer as a coated film for forming an adhesion layer are described hereafter.

(1) When obtaining a transfer film laminate using a thermosetting resin coated film for an adhesion layer

In the transfer film laminate forming process, it is possible to bond the base material and the medium-refractive-index film by obtaining an adhesion layer, by performing at least one of pressing and heating on the transfer film laminate substance obtained by the transfer film laminate substance forming process.

As a method of pressing, for example, a method of pressing with a rubber roll may be exemplified. As the pressing condition, for example, 5 to 15 MPa may be exemplified.

As a method of heating, for example, a method of heating a base material may be exemplified. As the heating condition, for example, 40 to 125°C may be exemplified. By setting the heating condition as described above, it is possible to obtain good adhesion between the transfer film and the base material, such that a decrease in hardness due to excessive dissolution of the base material is not generated and the adhesion layer barely turns yellow.

The surface temperature of the base material when it is heated may be regulated in accordance with the setting temperature and heating time of the heating unit. Further, as a method of measuring the temperature of the base material, for example, a method of using a non-contact type of surface thermometer may be exemplified.

Further, in the invention, it may form the transfer film laminate and the transfer film laminate substance, simultaneously.

In the invention, if necessary, it is possible to obtain a low-refractive-index film sufficiently hardened by promoting hardening of the low-refractive-index film in the heating.

In the invention, if necessary, it is possible to obtain a low-refractive-index film sufficiently hardened by promoting hardening of the low-refractive-index film, by radiating active energy rays in addition to the treatment described above.

(2) When obtaining a transfer film laminate using a curable coated film for an adhesion layer

In the transfer film laminate forming process, it is possible to form an adhesion layer by hardening the curable coated film for an adhesion layer, by radiating active energy rays to the transfer film laminate substance obtained in the transfer film laminate substance forming process.

The active energy rays can be radiated to the transfer film laminate substance through a transfer film. Further, it may be possible to radiate the active energy rays from the base material side, if necessary, in accordance with the shape of the base material.

As the above active energy rays, for example, ultraviolet rays may be exemplified. As a light source when ultraviolet rays are radiated, for example, a high-pressure mercury lamp, a metal halide lamp, and a fluorescent ultraviolet lamp may be exemplified.

As the active energy ray radiation condition described above, for example, a condition of peak illumination of 100 $mW/cm^2$ or more and accumulated light amount of 10 $mJ/cm^2$ or more may be exemplified.

In the invention, it is possible to obtain a low-refractive-index film sufficiently hardened by promoting hardening of a low-refractive-index film, if necessary, when hardening the curable coated film for an adhesion layer.

Transfer Film Laminate

The transfer film laminate is a laminate formed by stacking the side of the medium-refractive-index film of the transfer film and a base material with an adhesion layer therebetween.

As a method of producing the transfer film laminate, any one of a method of obtaining an adhesion layer after stacking a medium-refractive-index film of a transfer film with a coated film for forming an adhesion layer on the surface onto a base material such that the side with the coated film for forming an adhesion layer on the transfer film is in contact with the base material, and a method of stacking a base material with a coated film for forming an adhesion layer onto

the surface onto the side of the medium-refractive-index film of the transfer film may be exemplified.

As a method of stacking the base material and the transfer film, for example, a method of pressing them with a rubber roll may be exemplified. The pressing may be performed under the condition of 5 to 15 MPa, for example. Further, it is preferable to heat the surface of the base material to stack to 40 to 125°C. By setting the heating condition as described above, it is possible to obtain good adhesion between the transfer film and the base material, such that a decrease in hardness due to excessive dissolution of the base material can be suppressed and change into yellow of the adhesion layer can be suppressed.

The surface temperature of the base material when it is heated may be regulated in accordance with the setting temperature and heating time of the heating unit. Further, as a method of measuring the temperature of the base material, for example, a method of using a non-contact type of surface thermometer may be exemplified.

In the invention, if necessary, it is possible to obtain a low-refractive-index film sufficiently hardened by promoting hardening of the low-refractive-index film, the high-refractive-index film, and the medium-refractive-index film in the heating.

In the invention, if necessary, it is possible to obtain a low-refractive-index film sufficiently hardened by promoting hardening of the low-refractive-index film, the high-refractive-index film, and the medium-refractive-index film, by radiating active energy rays in addition to the treatment described above.

In the invention, in order to prevent air from being included when stacking the base material and the transfer film, it is preferable to obtain a coated film for forming an adhesion layer, using an excessive amount of adhesion layer forming material.

Laminate (B) Forming Process

The laminate (B) forming process is a process of obtaining a laminate (B) by separating a separation film from a transfer film laminate. When separating the separation film from the transfer film laminate, it is possible to separate the separation film from the transfer film laminate, for example, at room temperature, using a known method.

EXAMPLES

Hereinafter, the invention is described with reference to examples. Further, the abbreviations of the compounds used in the examples and the comparative examples are as follows. Further, "part" and "%" mean "part by weight" and "% by weight", respectively, in the following description.

"TAS": condensed mixture of succinic acid/trimethylolethane/acrylic acid (mole ratio 1/2/4)
"C6DA": 1,6-hexanedioldiacrylate (by OSAKA organic chemical industry Ltd. trade name: Viscoat #230)
"M305": pentaerythritol triacrylate (by TOAGOSEI Co., Ltd., trade name: Aronix M305)
"M400": di-pentaerythritol haxaacrylate (by TOAGOSEI Co., Ltd., trade name: Aronix M400)
"U6HA": urethane acrylate (by SHIN-NAKAMURA CHEMICAL Co. Ltd., trade name: NK oligo U6-HA)
"DAC": Polyether compound solution containing fluorine group having perfluoropolyether group and active energy ray- reactant group (by DAIKIN industries, Ltd., solid content concentration of 20%, 2, 2, 3, 3- tetra fluoror- 1- propanol solution, trade name: Optool DAC)
"DAROCUR": 2, 4, 5- trimethyl benzoyl- diphenyl- phosphine oxide (by BASF Japan Co., Ltd., trade name: DAROCUR TPO)
"IRGACURE": 1- hydroxy- cyclohexyl- phenyl- ketone (by BASF Japan Co., Ltd, trade name: IRGACURE 184)
"KBM503": 3-Methacryloxypropyl trimethoxy silane (BY SHIN-ETSU Chemical Co., Ltd, trade name: Shin-etsu silicone KBM503)
"Sururia S": isopropyl alcohol (IPA) dispersing element of a hollow silica sol (solid content concentration of 20%) (by JGC Catalysts & Chemicals Ltd., trade name: Sururia S)
"PGM": 1- methoxy- 2- propanol (Wako Pure Chemical Industries, Ltd., Reagent 1 grade)
"IPA": isopropanol (Wako Pure Chemical Industries, Ltd., Reagent 1 grade)
"Toluene": toluene (Wako Pure Chemical Industries, Ltd., Reagent 1 grade)
"ZRT-E28": toluene dispersing element of zirconia (solid content concentration of 15%), 77% by weight of ratio of zirconia particles to total weight of KBM503 and zirconia particles (by CIK Nanotech Ltd., trade name: ZRT15WT%-E28)
"ZRT-E30": toluene dispersing element of zirconia (solid content concentration of 15%), 67% by weight of ratio of zirconia particles to total weight of KBM503 and zirconia particles (by CIK Nanotech Ltd., trade name: ZRT15WT%-E30)

"MR-1009 SBV": IPA dispersing element of antimony pentoxide (solid content concentration of 30%) (by JGC Catalysts & Chemicals Ltd., trade name: MR-1009 SBV)
"KBM602": N- 2- (aminoethyl)- 3- aminopropyl methyl- dimethoxy silane (BY SHIN- ETSU Chemical Co., Ltd, trade name: Shin- etsu silicone KBM602)
"KBM603": N- 2- (aminoethyl)- 3- aminopropyl trimethoxy silane (BY SHIN- ETSU Chemical Co., Ltd, trade name: Shin- etsu silicone KBM603)
"Acrylite": methacrylic resin plate (Mitsubishi Rayon Co., Ltd., trade name: Acrylite EX001)

An evaluation method performed by the invention is described below.

(1) Temperature of base material

A non-contact type of surface thermometer (by Chino Corp., handy-type radiation thermometer IR-TA (trade name)) was used to measure the surface temperature of the base material.

(2) Total electron ray transmittance and haze value

The total electronic ray transmittance of a laminate was measured based on the measuring method under JIS K7361-1 with HAZE METER NDH2000 (trade name) by NIPPON DENSHOKU INDUSTRIES Co., Ltd, and a haze value was measured based on the measuring method under JIS K7136.

(3) Scratch resistance

Scratch resistance was evaluated by placing a circular pad equipped with the #0000 steel wood and having a diameter of 25.4 mm on the surface of a low-refractive-index film of a laminate, scratching it by a distance of 20 mm at 20 times in a reciprocating manner under load of 2.0 kg, obtaining the difference (Δhaze) in the haze values before and after scratching from the following equation, and counting the scratches on the surface of the sample after the test.

$$[\Delta\text{Haze}(\%)] = [\text{Haze value}(\%)\text{ after scratching}] - [\text{Haze value }(\%)\text{ before scratching}]$$

(4) Antireflection

A test sample with the side, where a low-refractive-index film of a laminate is not stacked, roughened with sandpaper and then coated with a delustering black spray was prepared, the reflectance of the surface of the low-refractive-index film of the sample was measured based on a method under JIS R3106 at an incident angle of 5° and in a wavelength range of 380 to 780 nm, with a spectral photometer (by Hitachi Ltd., trade name: U-4000), and the wavelength at the lowest reflectance (wavelength at bottom) and the reflectance at the bottom wavelength (reflectance at bottom wavelength) in the obtained reflectance curve were measured.

Further, whether the reflective color changes when the surface of the low- refractive- index film of the laminate was stained with a fingerprint was evaluated under the following criteria.

⊙: No change in reflective color
○: A little change in reflective color
x: Change in reflective color

(5) Stain resistance

The stain resistance of the low-refractive-index film on the surface of the laminate was evaluated based on the water contact angle, triolein contact angle, and oil-based ink removability, as follows.

(a) Water contact angle

Under an environment of 23°C and relative humidity of 50%, a drop of 0.2 μL of ion-exchange water was dropped to the surface of the low-refractive-index film, and measuring the contact angle of the water and the low-refractive-index film was measured with a portable contact angle meter (by Fibro system ab Ltd., trade name: PG-X),

thereby obtaining a water contact angle.

(b) Triolein contact angle

The triolein contact angle was obtained under similar to the case of measuring the water contact angle except that triolein is used instead of the ion-exchange water.

(c) Oil-based ink removability

A line was constructed on the surface of the low-refractive-index film of the laminate with an oil-based ink (black) (by SAKURA Color Products Corp., trade name: Myname (black)), the line was removed in 3 minutes with a paper towel (by NIPPON Paper Crecia Co., Ltd., trade name: Kimtowel), and the removable status of the oil-based ink was evaluated with naked eyes under the following criteria.

⊙: Oil-based ink completely removed by 5-time polishing
○: Oil-based ink line slightly left after 5-time polishing
×: Oil-based ink partially left even after 5-time polishing

(6) Adhesion

Adhesion of the low-refractive-index film of the laminate was evaluated based on the number of remaining cells without being separated in 100 cells by performing separation evaluation of 25-cell-matrix at four positions under JIS K5600-5-6.

(7) Film thickness of layers

A sample was cut by 100 nm width in the thickness direction of the laminate with a microtome and the cross-section of the laminate was observed with a transmission electron microscope (by JEOL Ltd., trade name: JEM-1010), thereby measuring the film thickness of the layers.

(8) Sweat resistance

Synthetic sweat was prepared under A-method of test method for color fastness on sweat of JIS L0848.

The laminate was cut into the size of 50 × 50 mm and used as an evaluation sample. Next, an absorbent cotton was cut into the size of 30 × 30 mm and was wetted by dropping synthetic sweat onto the absorbent cotton, with a syringe above the evaluation sample. The sample was left in a temperature and humidity maintenance with a temperature of 45°C and relative humidity of 95% for 96 hours and then taken out, and the surface of the laminate was cleaned with water and observed with naked eyes, thereby evaluating sweat resistance under the following criteria.

○: Color not changed
x: Color changed

(9) Measurement of refractive index

The refractive indices of the low-refractive-index film, the high-refractive-index film, medium-refractive-index film, and the adhesion layer were measured by a 594 nm laser, with a prism coupler (by Metricon Corp., Model 2010).

(10) Interference pattern

Five people evaluated, under the following criteria, whether there were the interference patterns on the surface of the laminate with naked eyes under a three band fluorescent pipe (by Toshiba, trade name: Mellow 5 40W).

⊙: No interference pattern even with change in angle
○: Thin interference pattern appearing with change in angle
Δ: Remarkable interference pattern appearing with change in angle
x: Remarkable interference pattern without change in angle

(11) Thicknesses (Tbi and Tci) of central region, thickness (Tai) of surface-layer region (a1), thickness (Tdi) of surface-layer region (a2), and length of the central region of medium-refractive-index film

A sample having a width of 100 nm was cut in the thickness direction of the laminate (thickness of T nm) with a microtome. The distribution status of the MO particles in the MO particle-containing film or the medium-refractive-index layer, on the thickness-direction cross-section of the sample, was photographed with a transmission electron microscope (by JEOL Ltd., JEM-1010 (trade name)).

A schematic diagram of the distribution status of the MO particles in the obtained picture of the thickness-direction cross-section of the sample is illustrated in Fig. 1.

In the picture, for the film thickness of the MO particle-containing film or the medium-refractive-index film in the thickness-direction cross-section, the total length (L) of the lengths (Li) of the central regions without an MO particle in the vertical length of 1,200 nm was calculated. For example, in Fig. 1, in the cross-sectional length of the sample having a length of 1,200 nm, the thicknesses (Tbi and Tci) of the central region, the thickness (Tai) of the surface-layer region (a1), and the thickness (Tdi) of the surface-layer region (a2), which satisfy Formulae (1) and (3) were measured and the sum of the lengths L1, L2, L3, and L4 at the measurement positions (length except the portions D1, D2, D3, and D4 out of the range of the invention) was set as the total length (L) of the lengths (Li) of the central regions without an MO particle.

Production example 1

Production of silica sol (1)

Hollow silica was individually treated as follows.

Sururia S of 63 g was put into a four mouth-flask reaction container with a stirrer and a cooling pipe and then KBM503 of 12 g was added. Thereafter, water of 4.4 g and 0.1 g hydrochloric water solution of 0.01 mol/l were sequentially added while stirring, and it was heated at 80°C for 2 hours. Next, it was volatilized and made flow outside until the solid content concentration reached 40% with the reaction system reduced in pressure, and toluene of 38 g was added and it was heated at 80°C for 2 hours. Thereafter, it was volatilized and made flow outside until the solid content concentration reached 60% with the reaction system reduced in pressure and further heated at 80°C for 2 hours, thereby producing a silica sol (1) which has undergone hydrolyzing treatment and condensation reaction treatment. The silica sol (1) is white and turbid liquid and the solid content concentration was 60%.

Further, the solid content concentration was calculated from the mass difference before and after drying, by heating and drying the silica sol (1) for 3 days under an environment of 80°C. Further, the ratio (%) of the inorganic particles in the silica sol (1) was obtained from the mass ratio of the inorganic particles to the total 100 parts of the used hydrolyzable silane compound and inorganic particles. Preparation Example 1

Preparation of LRM composition (1)

As an LRM composition, the LRM composition (1) listed in Table 1 was prepared.

Further, unless otherwise specified, the LRM composition was prepared under an environment of 25°C and left for 30 minutes in the environment of 25°C and then the LRM composition listed in Table 1 was applied to the surface of a separation film with a Bar coater.

[Table 1]

| | | | | Preparation example 1 |
|---|---|---|---|---|
| LRM composition | Class | | | (1) |
| | Monomer (A) | DAC | Solid content concentration (part) | 0.2 |
| | | | Solution (part) | 1 |
| | Inorganic particle (B) | Silica sol (1) | Solid content concentration (part) | 0.65 |
| | | | Ratio of inorganic particles (%) | 51 |
| | | | Solution (part) | 1.08 |
| | LRM cross-linked component | M400 | Solid content concentration (part) | 0.15 |
| | | | Solution (part) | 0.15 |
| | Photoinitiator | IRGACURE | Solid content concentration (part) | 0.05 |
| | Diluting solvent | IPA | (part) | 98.5 |
| | Content of monomer (A) in solid content | | (%) | 19.08 |
| | Solid content concentration | | (%) | 1.040 |
| Ultraviolet hardening condition | | Peak illumination | (mW/cm²) | 260 |
| | | Accumulated light amount | (mJ/cm²) | 400 |
| Refractive index of low-refractive-index film ($n_x$) | | | | 1.4 |

Preparation Examples 2 to 4

Preparation of HRM compositions (1) to (3)

As HRM compositions, the HRM compositions (1) to (3) listed in Table 2 were prepared.

Further, unless otherwise specified, the HRM composition was prepared under an environment of 25°C and left for 30 minutes in the environment of 25°C and then the HRM composition was applied to the surface of a coated film of an LRM composition with a Bar coater.

[Table 2]

| | | | | Preparation example 2 | Preparation example 3 | Preparation example 4 |
|---|---|---|---|---|---|---|
| HRM composition | Class | | | (1) | (2) | (3) |
| | High-refractive-index MO particles | ZRT-E28 | Solid content concentration (part) | 60 | 60 | 60 |
| | | | Toluene content (part) | 340 | 340 | 340 |
| | | | Solution (part) | 400 | 400 | 400 |
| | Amino silane | KBM602 | Solid content concentration (part) | 10 | 1 | 0 |
| | | | Solution (part) | 10 | 1 | 0 |
| | | KBM603 | Solid content concentration (part) | 0 | 0 | 10 |
| | | | Solution (part) | 0 | 0 | 10 |
| | HRM cross-linked component | M400 | Solid content concentration (part) | 30 | 39 | 30 |
| | | | Solution (part) | 30 | 39 | 30 |
| | Photoinitiator | DAROCUR | Solid content concentration (part) | 2 | 2 | 2 |
| | Diluting solvent | Toluene | (part) | 0 | 0 | 0 |
| | | IPA | (part) | 200 | 200 | 200 |
| | Solid content concentration | | (%) | 15.9 | 15.9 | 15.9 |
| Ultraviolet hardening condition | | Peak illumination | (mW/cm²) | 260 | 260 | 260 |
| | | Accumulated light amount | (mJ/cm²) | 800 | 800 | 800 |
| Refractive index of high-refractive-index film ($n_y$) | | | | 1.600 | 1.620 | 1.600 |

Preparation Examples 5 to 12

Preparation of MRM compositions (1) to (8)

As medium-refractive-index compositions, medium-refractive-index compositions (1) to (8) listed in Table 3 were prepared.

Further, unless otherwise specified, the MRM composition was prepared under an environment of 25°C and left for 30 minutes in the environment of 25°C and then the MRM composition was applied to the surface of a coated film of an HRM composition with a Bar coater.

[Table 3]

| | | | | Preparation example 5 | Preparation example 6 | Preparation example 7 | Preparation example 8 | Preparation example 9 | Preparation example 10 | Preparation example 11 | Preparation example 12 |
|---|---|---|---|---|---|---|---|---|---|---|---|
| MRM composition | Class | | | (1) | (2) | (3) | (4) | (5) | (6) | (7) | (8) |
| | MO particles | Class* | | A | A | A | A | A | A | B | A |
| | | Solid content concentration | part | 25 | 30 | 36 | 37 | 40 | 45 | 37 | 40 |
| | | Solvent content | part | 113 | 141 | 175 | 181 | 198 | 226 | 86 | 198 |
| | | Solution | part | 166 | 200 | 240 | 246 | 266 | 300 | 123 | 266 |
| | Cross-linked component | M400 | part | 75 | 70 | 64 | 63 | 60 | 55 | 63 | 60 |
| | Photoinitiator | DAROCUR | part | 5 | 5 | 5 | 5 | 5 | 5 | 5 | 5 |
| | Additive diluting solvent | Toluene | part | 4, 333 | 4, 333 | 4, 333 | 4, 333 | 4, 333 | 4, 333 | 0 | 0 |
| | | PGM | part | 4, 333 | 4, 333 | 4, 333 | 4, 333 | 4, 333 | 4, 333 | 6, 499 | 9, 099 |
| | | IPA | part | 4, 333 | 4, 333 | 4, 333 | 4, 333 | 4, 333 | 4, 333 | 6, 499 | 3, 899 |
| | Ratio of diluting solvent having volatilization speed of 100 or less in diluting solvent | | % | 33 | 33 | 33 | 33 | 33 | 33 | 50 | 69 |
| | Solid content concentration | | % | 0. 79 | 0. 79 | 0. 79 | 0. 79 | 0. 79 | 0. 79 | 0. 79 | 0. 79 |
| Ultraviolet hardening condition | | Peak illumination | mW/cm² | 260 | 260 | 260 | 260 | 260 | 260 | 260 | 260 |
| | | Accumulated light amount | mJ/cm² | 400 | 400 | 400 | 400 | 400 | 400 | 400 | 400 |
| Refractive index of medium-refractive-index film (nz) | | | | 1. 550 | 1. 560 | 1. 568 | 1. 570 | 1. 575 | 1. 580 | 1. 575 | 1. 575 |

*) A: ZRT-E30 Zirconia particles Solid content concentration of 15% by weight Solvent toluene
B: MR-1009SBV Antimony pentoxide particles Solid content concentration of 30% by weight Solvent IPA

EXAMPLE 1

An LRM composition coated film was formed by applying an LRM composition (1) onto the PET surface of a PET film (Toyobo Co., Ltd, trade name: A4100) having a thickness of 100 μm with a No. 10 bar coater, and drying it at 100°C for 1.5 minutes and at 150°C for 1 minute. Further, the critical surface tension of the PET surface was 44 mN/m.

Next, a separation film stacked with a low- refractive- index film was obtained by hardening the coated film of the LRM composition, by passing the PET film stacked with the LRM composition coated film, at a speed of 4.5 m/min, through the portion at 20 cm under a high- pressure mercury lamp (output set at 100%) of 9.6 kW under nitrogen flow. In this process, the accumulated light amount was 400 mJ/cm$^2$ and the peak illumination was 260 mW/cm$^2$.

Next, corona treatment was performed by passing the separation film stacked with a low- refractive- index film on a conveyer belt, with the low- refractive- index film upward, under the electrode at a conveying speed of 2.0 m/min with a film- electrode gap of 3 mm, by applying a voltage of 11.6 kV for corona discharge, with POLYDYNE (trade name), which is a corona treatment device by NAVITAS Co., Ltd., for an electrode by SUS which has a thickness of 1 mm and a length of 260 mm on the conveyer belt. The radiation energy on the film under the condition was 100 W·min/m.

Further, a coated film of an HRM composition was formed by applying an HRM composition (1) onto the surface of the low- refractive- index film that has undergone corona treatment with a No. 10 bar coater, and drying it at 100°C for 1.5 minutes and at 150°C for 1 minute, and a separation film stacked with a high- refractive- index film was obtained by hardening the coated film of the HRM composition by passing the coated film at a speed of 4.5 m/min through the portion.at 20 cm under a high- pressure mercury lamp (output set at 100%) of 9.6 kW under air. Further, the high- pressure mercury lamp was turned on/off two times. In this process, the accumulated light amount was 800 mJ/cm$^2$ and the peak illumination was 260 mW/cm$^2$.

Further, a coated film of a medium- refractive- index composition was formed by applying an MRM composition (1) onto the surface of the high- refractive- index film with a No. 10 bar coater, and drying it at 80°C for 1.5 minutes and at 120°C for 1 minute, and a laminated film stacked with a medium- refractive- index film was obtained by hardening the coated film of the MRM composition by passing the coated film at a speed of 4.5 m/min through the portion at 20 cm under a high- pressure mercury lamp (output set at 100%) of 9.6 kW. In this process, the accumulated light amount was 400 mJ/cm$^2$ and the peak illumination was 260 mW/cm$^2$.

Further, a transfer film was obtained by stacking a coated film for forming an adhesion layer, by applying an active energy ray- curable composition, which is obtained by mixing TAS 35 parts, C6DA 30 parts, M305 10 parts, M400 25 parts, and DAROCUR 2 parts, as adhesion layer forming materials, onto the surface of a medium- refractive- index film of a laminated film stacked with a medium- refractive- index film, with No. 10 bar coater.

The transfer film was stacked on the surface of a base material heated to 60°C with a coated film for forming an adhesion layer therebetween, using a methacrylic resin plate (Acrylite) having a plate thickness of 2 mm as a base material.

A laminate with an adhesion layer was obtained by stacking an adhesion layer, by hardening a coated film for forming an adhesion layer, by passing the laminate at a speed of 2.5 m/min through a portion at 20 cm under a metal halide lamp having output of 9.6 kW, with a PET film therebetween, after 60 seconds passed with the laminate heated to 60°C. As the hardening condition for obtaining a film laminate with an adhesion layer, the accumulated light amount was 570 mJ/cm$^2$ and the peak illumination was 220 mW/cm$^2$.

Thereafter, a laminate was obtained by separating the PET film from the laminate with the adhesion layer.

The film thickness of the adhesion layer in the obtained laminate was 13 μm. The evaluation results were listed in Table 4.

As the result of measuring the film thicknesses of the low-refractive-index film, the high-refractive-index film, and the medium-refractive-index film of the laminate, the film thicknesses of the low-refractive-index film, the high-refractive-index film, and the medium-refractive-index film were 100 nm, 1,400 nm, and 60 nm, respectively.

The total electron ray transmittance of the laminate was 94.8% and the haze value was 0.15%, and the transparency was excellent.

The Δhaze was 0.05% and the number of scratches was 1, after the scratch test on the surface of the low-refractive-index film of the laminate. Further, the adhesion of the laminate was good.

For the sweat resistance of the surface of the low-refractive-index film of the laminate, the color did not change. Further, the wavelength at the bottom of the surface of the low-refractive-index film of the laminate was 620 nm and the wavelength reflectance at the bottom was 1.0%. Further, there was no change in reflective light, even though the surface of the low-refractive-index film of the laminate was stained with a fingerprint. Further, there was no interference pattern even though the angle was changed in the evaluation of an interference pattern.

The water contact angle on the surface of the low-refractive-index film of the laminate was 105 degrees and the triolein contact angle was 65 degrees. Further, the oil-based ink removability of the surface of the low-refractive-index film of the laminate was the level where oil-based ink can be completely removed by 5-time polishing.

Further, whether there were MO particles in the medium- refractive- index film was observed and the ratio of

the central region in the medium- refractive- index film was 864 nm (72% of 1, 200 nm) .

EXAMPLES 2 and 3

As listed in Table 4, a laminate was produced as in Example 1, except that the MRM composition was changed. The evaluation results were listed in Table 4.

EXAMPLES 4 and 5

As listed in Table 4, a laminate was produced as in Example 1, except that the MRM composition was changed and the active energy ray-curable composition obtained by mixing U6HA 10 parts, C6DA 30 parts, M305 30 parts, M400 30 parts, and DAROCUR 2 parts as adhesion layer forming materials was changed. The evaluation results were listed in Table 4.

EXAMPLES 6 to 8

As listed in Table 5, a laminate was produced as in Example 1, except that the HRM composition and the MRM composition were changed. The evaluation results were listed in Table 5.

EXAMPLES 9 and 10

As listed in Table 5, a laminate was produced as in Example 1, except that the HRM composition the MRM composition were changed and the active energy ray-curable composition obtained by mixing U6HA 10 parts, C6DA 30 parts, M305 30 parts, M400 30 parts, and DAROCUR 2 parts as adhesion layer forming materials was changed. The evaluation results were listed in Table 6.

EXAMPLE 11

As listed in Table 6, a laminate was produced as in Example 2, except that the HRM composition was changed. The evaluation results were listed in Table 6.

EXAMPLES 12 and 13

As listed in Table 6, a laminate was produced as in Example 2, except that the film thickness of the high-refractive-index film was changed. The evaluation results were listed in Table 6.

EXAMPLES 14 and 15

As listed in Table 6, a laminate was produced as in Example 2, except that the film thickness of the medium-refractive-index film was changed. The evaluation results were listed in Table 6.

EXAMPLES 16 and 17

As listed in Table 7, a laminate was produced as in Example 1, except that the MRM composition was changed and the active energy ray-curable composition obtained by mixing U6HA 10 parts, C6DA 30 parts, M305 30 parts, M400 30 parts, and DAROCUR 2 parts as adhesion layer forming materials was changed. The evaluation results were listed in Table 7.

COMPARATIVE EXAMPLE 1

A laminate was produced as in Example 2, except that the film forming conditions of the MRM composition are changed as follows, in Example 2. The evaluation results were listed in Table 7. There was a remarkable interference pattern, because a central region was not formed in the medium-refractive-index film.

Film forming condition of MRM composition

A laminated film stacked with a medium-refractive-index film was obtained by hardening a coated film of the MRM composition, by forming the coated film of the MRM composition by applying the MRM composition (2) with No.

10 bar coater and drying it at 150°C for 10 minutes, and then passing the coated film at a speed of 4.5 m/min through a portion at 20 cm under a high-pressure mercury lamp (output set at 100%) of 9.6 kW. In this process, the accumulated light amount was 400 $mJ/cm^2$ and the peak illumination was 260 $mW/cm^2$.

COMPARATIVE EXAMPLE 2

A laminate was produced as in Example 2, except that a medium-refractive-index film was not formed, in Example 2. The evaluation results were listed in Table 7. There was a remarkable interference pattern, because there was no medium-refractive-index film.

[Table 4]

| | | | | Example 1 | Example 2 | Example 3 | Example 4 | Example 5 |
|---|---|---|---|---|---|---|---|---|
| Low-refractive-index film | LRM composition | | Class | (1) | (1) | (1) | (1) | (1) |
| | Thickness ($d_x$) | | nm | 100 | 100 | 100 | 100 | 100 |
| | Refractive index ($n_x$) | | | 1.40 | 1.40 | 1.40 | 1.40 | 1.40 |
| High-refractive-index film | HRM composition | | Class | (1) | (1) | (1) | (1) | (1) |
| | Thickness ($d_y$) | | nm | 1,400 | 1,400 | 1,400 | 1,400 | 1,400 |
| | Refractive index ($n_y$) | | | 1.600 | 1.600 | 1.600 | 1.600 | 1.600 |
| Medium-refractive-index film | MRM composition | | Class | (1) | (2) | (3) | (4) | (5) |
| | Thickness ($d_z$) | | nm | 60 | 60 | 60 | 60 | 60 |
| | Refractive index ($n_z$) | | | 1.550 | 1.560 | 1.568 | 1.570 | 1.575 |
| | $(n_{HC} \times n_y)^{1/2} - (n_y - n_{HC})/8$ | | | 1.549 | 1.549 | 1.549 | 1.562 | 1.562 |
| | $(n_{HC} \times n_y)^{1/2} + (n_y - n_{HC})/8$ | | | 1.569 | 1.569 | 1.569 | 1.577 | 1.577 |
| Drying condition of MRM composition | Time | First | Min | 1.5 | 1.5 | 1.5 | 1.5 | 1.5 |
| | | Second | Min | 1 | 1 | 1 | 1 | 1 |
| | Temperature | First | °C | 80 | 80 | 80 | 80 | 80 |
| | | Second | °C | 120 | 120 | 120 | 120 | 120 |
| Producing condition of transfer film laminate | Adhesion layer | | Class | (1) | (1) | (1) | (2) | (2) |
| | Temperature | | °C | 60 | 60 | 60 | 60 | 60 |
| | Time | | Sec. | 60 | 60 | 60 | 60 | 60 |
| | Hardening condition | Peak illumination | mW/cm² | 220 | 220 | 220 | 220 | 220 |
| | | Accumulated light amount | mJ/cm² | 570 | 570 | 570 | 570 | 570 |
| | Refractive ratio of adhesion layer ($n_{HC}$) | | | 1.520 | 1.520 | 1.520 | 1.540 | 1.540 |
| | Kind of base material | | | Methacrylic resin | | | | |
| Evaluation result of laminate | Total light transmittance | | % | 94.8 | 94.8 | 94.8 | 94.8 | 94.8 |
| | Haze | | % | 0.15 | 0.15 | 0.15 | 0.15 | 0.15 |
| | Scratch resistance | ΔHaze | % | 0.05 | 0.05 | 0.05 | 0.05 | 0.05 |
| | | Number of scratches | lines | 1 | 1 | 1 | 1 | 1 |
| | Antireflection | Wavelength at bottom | nm | 620 | 620 | 620 | 620 | 620 |
| | | Wavelength reflective ratio at bottom | % | 1.0 | 1.0 | 1.0 | 1.0 | 1.0 |
| | | Whether there is a change in reflective color | | ◎ | ◎ | ◎ | ◎ | ◎ |
| | Interference pattern (evaluated with naked eyes) | | | ◎ | ◎ | ◎ | ◎ | ○ |
| | Stain resistance | Water contact angle | Degree | 105 | 105 | 104 | 110 | 105 |
| | | Triolein contact angle | Degree | 65 | 66 | 68 | 66 | 62 |
| | | Oil-based ink removability | | ◎ | ◎ | ◎ | ◎ | ◎ |
| | Adhesion | | | 100/100 | 100/100 | 100/100 | 100/100 | 100/100 |
| | Sweat resistance | | | ○ | ○ | ○ | ○ | ○ |
| | Thickness of surface-layer region (a1) | Ta1 (nm) | Maximum | 18 | 20 | 21 | 22 | 23 |
| | | | Minimum | 6 | 7 | 7 | 8 | 8 |
| | Thickness of surface-layer region (a2) | Td1 (nm) | Maximum | 20 | 21 | 21 | 21 | 22 |
| | | | Minimum | 7 | 8 | 8 | 10 | 10 |
| | Thickness of central region | Tb1 (nm) | Maximum | 12 | 10 | 9 | 8 | 7 |
| | | | Minimum | 24 | 23 | 23 | 22 | 22 |
| | | Tc1 (nm) | Maximum | 10 | 9 | 9 | 9 | 8 |
| | | | Minimum | 23 | 22 | 22 | 20 | 20 |
| | Total length of central region (L) | | nm | 864 | 840 | 600 | 540 | 360 |
| | Forming ratio of central region | | % | 72 | 70 | 50 | 45 | 30 |

[Table 5]

| | | | | Example 6 | Example 7 | Example 8 | Example 9 | Example 10 |
|---|---|---|---|---|---|---|---|---|
| Low-refractive-index film | LRM composition | | Class | (1) | (1) | (1) | (1) | (1) |
| | Thickness ($d_x$) | | nm | 100 | 100 | 100 | 100 | 100 |
| | Refractive index ($n_x$) | | | 1.40 | 1.40 | 1.40 | 1.40 | 1.40 |
| High-refractive-index film | HRM composition | | Class | (2) | (2) | (2) | (2) | (2) |
| | Thickness ($d_y$) | | nm | 1,400 | 1,400 | 1,400 | 1,400 | 1,400 |
| | Refractive index ($n_y$) | | | 1.620 | 1.620 | 1.620 | 1.620 | 1.620 |
| Medium-refractive-index film | MRM composition | | Class | (2) | (4) | (6) | (4) | (6) |
| | Thickness ($d_z$) | | nm | 60 | 60 | 60 | 60 | 60 |
| | Refractive index ($n_z$) | | | 1.560 | 1.570 | 1.580 | 1.570 | 1.580 |
| | $(n_{HC} \times n_y)^{1/2} - (n_y - n_{HC})/8$ | | | 1.577 | 1.557 | 1.557 | 1.569 | 1.569 |
| | $(n_{HC} \times n_y)^{1/2} + (n_y - n_{HC})/8$ | | | 1.582 | 1.582 | 1.582 | 1.589 | 1.589 |
| Drying condition of MRM composition | Time | First | Min | 1.5 | 1.5 | 1.5 | 1.5 | 1.5 |
| | | Second | Min | 1 | 1 | 1 | 1 | 1 |
| | Temperature | First | °C | 80 | 80 | 80 | 80 | 80 |
| | | Second | °C | 120 | 120 | 120 | 120 | 120 |
| Producing condition of transfer film laminate | Adhesion layer | | Class | (1) | (1) | (1) | (2) | (2) |
| | Temperature | | °C | 60 | 60 | 60 | 60 | 60 |
| | Time | | Sec. | 60 | 60 | 60 | 60 | 60 |
| | Hardening condition | Peak illumination | mW/cm² | 220 | 220 | 220 | 220 | 220 |
| | | Accumulated light amount | mJ/cm² | 570 | 570 | 570 | 570 | 570 |
| | Refractive ratio of adhesion layer ($n_{HC}$) | | | 1.520 | 1.520 | 1.520 | 1.540 | 1.540 |
| | Kind of base material | | | Methacrylic resin | | | | |
| Evaluation result of laminate | Total light transmittance | | % | 95.2 | 95.2 | 95.2 | 95.2 | 95.2 |
| | Haze | | % | 0.15 | 0.15 | 0.15 | 0.15 | 0.15 |
| | Scratch resistance | Δhaze | % | 0.05 | 0.05 | 0.05 | 0.05 | 0.05 |
| | | Number of scratches | lines | 1 | 1 | 1 | 1 | 1 |
| | Antireflection | Wavelength at bottom | nm | 620 | 620 | 620 | 620 | 620 |
| | | Wavelength reflective ratio at bottom | % | 0.9 | 0.9 | 0.9 | 0.9 | 0.9 |
| | | Whether there is a change in reflective color | | ◎ | ◎ | ◎ | ◎ | ◎ |
| | Interference pattern (evaluated with naked eyes) | | | ◎ | ◎ | ○ | ◎ | ○ |
| | Stain resistance | Water contact angle | Degree | 110 | 108 | 104 | 110 | 106 |
| | | Triolein contact angle | Degree | 66 | 62 | 59 | 66 | 66 |
| | | Oil-based ink removability | | ◎ | ◎ | ◎ | ◎ | ◎ |
| | Adhesion | | | 100/100 | 100/100 | 100/100 | 100/100 | 100/100 |
| | Sweat resistance | | | ○ | ○ | ○ | ○ | ○ |
| | Thickness of surface-layer region (a1) | Ta1 (nm) | Maximum | 20 | 22 | 23 | 22 | 23 |
| | | | Minimum | 7 | 8 | 10 | 8 | 10 |
| | Thickness of surface-layer region (a2) | Td1 (nm) | Maximum | 21 | 21 | 22 | 21 | 22 |
| | | | Minimum | 8 | 10 | 11 | 10 | 11 |
| | Thickness of central region | Tb1 (nm) | Maximum | 10 | 8 | 7 | 8 | 7 |
| | | | Minimum | 23 | 22 | 20 | 22 | 20 |
| | | Tc1 (nm) | Maximum | 9 | 9 | 8 | 9 | 8 |
| | | | Minimum | 22 | 20 | 19 | 20 | 19 |
| | Total length of central region (L) | | nm | 840 | 540 | 264 | 540 | 264 |
| | Forming ratio of central region | | % | 70 | 45 | 22 | 45 | 22 |

[Table 6]

| | | | | Example 11 | Example 12 | Example 13 | Example 14 | Example 15 |
|---|---|---|---|---|---|---|---|---|
| Low-refractive-index film | LRM composition | | Class | (1) | (1) | (1) | (1) | (1) |
| | Thickness ($d_x$) | | nm | 100 | 100 | 100 | 100 | 100 |
| | Refractive index ($n_x$) | | | 1.40 | 1.40 | 1.40 | 1.40 | 1.40 |
| High-refractive-index film | HRM composition | | Class | (3) | (1) | (1) | (1) | (1) |
| | Thickness ($d_y$) | | nm | 1,400 | 600 | 1,000 | 1,400 | 1,400 |
| | Refractive index ($n_y$) | | | 1.600 | 1.600 | 1.600 | 1.600 | 1.600 |
| Medium-refractive-index film | MRM composition | | Class | (2) | (2) | (2) | (2) | (2) |
| | Thickness ($d_z$) | | nm | 60 | 60 | 60 | 40 | 80 |
| | Refractive index ($n_z$) | | | 1.560 | 1.560 | 1.560 | 1.560 | 1.560 |
| | $(n_{HC} \times n_y)^{1/2} - (n_y - n_{HC})/8$ | | | 1.549 | 1.549 | 1.549 | 1.549 | 1.549 |
| | $(n_{HC} \times n_y)^{1/2} + (n_y - n_{HC})/8$ | | | 1.569 | 1.569 | 1.569 | 1.569 | 1.569 |
| Drying condition of MRM composition | Time | First | Min | 1.5 | 1.5 | 1.5 | 1.5 | 1.5 |
| | | Second | Min | 1 | 1 | 1 | 1 | 1 |
| | Temperature | First | °C | 80 | 80 | 80 | 80 | 80 |
| | | Second | °C | 120 | 120 | 120 | 120 | 120 |
| Producing condition of transfer film laminate | Adhesion layer | | Class | (1) | (1) | (1) | (1) | (1) |
| | Temperature | | °C | 60 | 60 | 60 | 60 | 60 |
| | Time | | Sec. | 60 | 60 | 60 | 60 | 60 |
| | Hardening condition | Peak illumination | mW/cm² | 220 | 220 | 220 | 220 | 220 |
| | | Accumulated light amount | mJ/cm² | 570 | 570 | 570 | 570 | 570 |
| | Refractive ratio of adhesion layer ($n_{HC}$) | | | 1.520 | 1.520 | 1.520 | 1.520 | 1.520 |
| | Kind of base material | | | Methacrylic resin | | | | |
| Evaluation result of laminate | Total light transmittance | | % | 94.8 | 94.8 | 94.8 | 94.8 | 94.8 |
| | Haze | | % | 0.15 | 0.15 | 0.15 | 0.15 | 0.15 |
| | Scratch resistance | Δhaze | % | 0.05 | 0.2 | 0.1 | 0.05 | 0.05 |
| | | Number of scratches | lines | 1 | 3 | 2 | 1 | 1 |
| | Antireflection | Wavelength at bottom | nm | 620 | 620 | 620 | 620 | 620 |
| | | Wavelength reflective ratio at bottom | % | 1.0 | 1.0 | 1.0 | 1.0 | 1.0 |
| | | Whether there is a change in reflective color | | ◎ | ◎ | ◎ | ◎ | ◎ |
| | Interference pattern (evaluated with naked eyes) | | | ◎ | ◎ | ◎ | ◎ | ◎ |
| | Stain resistance | Water contact angle | Degree | 110 | 110 | 110 | 110 | 110 |
| | | Triolein contact angle | Degree | 66 | 66 | 66 | 66 | 66 |
| | | Oil-based ink removability | | ◎ | ◎ | ◎ | ◎ | ◎ |
| | Adhesion | | | 100/100 | 100/100 | 100/100 | 100/100 | 100/100 |
| | Sweat resistance | | | ○ | ○ | ○ | ○ | ○ |
| | Thickness of surface-layer region (a1) | Ta1 (nm) | Maximum | 20 | 20 | 20 | 14 | 30 |
| | | | Minimum | 7 | 7 | 7 | 5 | 11 |
| | Thickness of surface-layer region (a2) | Td1 (nm) | Maximum | 21 | 21 | 21 | 15 | 28 |
| | | | Minimum | 8 | 8 | 8 | 6 | 12 |
| | Thickness of central region | Tb1 (nm) | Maximum | 10 | 10 | 10 | 6 | 10 |
| | | | Minimum | 23 | 23 | 23 | 15 | 29 |
| | | Tc1 (nm) | Maximum | 9 | 9 | 9 | 5 | 12 |
| | | | Minimum | 22 | 22 | 22 | 14 | 28 |
| | Total length of central region (L) | | nm | 840 | 840 | 840 | 780 | 780 |
| | Forming ratio of central region | | % | 70 | 70 | 70 | 65 | 65 |

[Table 7]

| | | | | Example 16 | Example 17 | Comparative Example 1 | Comparative Example 2 |
|---|---|---|---|---|---|---|---|
| Low-refractive-index film | LRM composition | | Class | (1) | (1) | (1) | (1) |
| | Thickness ($d_x$) | | nm | 100 | 100 | 100 | 100 |
| | Refractive index ($n_x$) | | | 1.40 | 1.40 | 1.40 | 1.40 |
| High-refractive-index film | HRM composition | | Class | (1) | (1) | (1) | (1) |
| | Thickness ($d_y$) | | nm | 1,400 | 1,400 | 1,400 | 1,400 |
| | Refractive index ($n_y$) | | | 1.600 | 1.600 | 1.600 | 1.600 |
| Medium-refractive-index film | MRM composition | | Class | (7) | (8) | (2) | – |
| | Thickness ($d_z$) | | nm | 60 | 60 | 60 | – |
| | Refractive index ($n_z$) | | | 1.575 | 1.575 | 1.560 | – |
| | $(n_{HC} \times n_y)^{1/2} - (n_y - n_{HC})/8$ | | | 1.562 | 1.562 | 1.549 | – |
| | $(n_{HC} \times n_y)^{1/2} + (n_y - n_{HC})/8$ | | | 1.577 | 1.577 | 1.569 | – |
| Drying condition of MRM composition | Time | First | Min | 1.5 | 1.5 | 10 | – |
| | | Second | Min | 1 | 1 | – | – |
| | Temperature | First | °C | 80 | 80 | 150 | – |
| | | Second | °C | 120 | 120 | – | – |
| Producing condition of transfer film laminate | Adhesion layer | | Class | (2) | (2) | (1) | (1) |
| | Temperature | | °C | 60 | 60 | 60 | 60 |
| | Time | | Sec. | 60 | 60 | 60 | 60 |
| | Hardening condition | Peak illumination | mW/cm² | 220 | 220 | 220 | 220 |
| | | Accumulated light amount | mJ/cm² | 570 | 570 | 570 | 570 |
| | Refractive ratio of adhesion layer ($n_{HC}$) | | | 1.540 | 1.540 | 1.520 | 1.520 |
| | Kind of base material | | | Methacrylic resin | | | |
| Evaluation result of laminate | Total light transmittance | | % | 94.8 | 94.8 | 94.8 | 94.8 |
| | Haze | | % | 0.15 | 0.15 | 0.15 | 0.15 |
| | Scratch resistance | Δhaze | % | 0.05 | 0.05 | 0.05 | 0.2 |
| | | Number of scratches | lines | 1 | 1 | 1 | 5 |
| | Antireflection | Wavelength at bottom | nm | 620 | 620 | 620 | 620 |
| | | Wavelength reflective ratio at bottom | % | 1.0 | 1.0 | 1.0 | 1.0 |
| | | Whether there is a change in reflective color | | ◎ | ◎ | ◎ | ◎ |
| | Interference pattern (evaluated with naked eyes) | | | ○ | ○ | × | × |
| | Stain resistance | Water contact angle | Degree | 105 | 105 | 105 | 105 |
| | | Triolein contact angle | Degree | 62 | 62 | 66 | 66 |
| | | Oil-based ink removability | | ◎ | ◎ | ◎ | ◎ |
| | Adhesion | | | 100/100 | 100/100 | 100/100 | 100/100 |
| | Sweat resistance | | | ○ | ○ | ○ | ○ |
| | Thickness of surface-layer region (a1) | Ta1 (nm) | Maximum | 22 | 22 | – | – |
| | | | Minimum | 11 | 9 | – | – |
| | Thickness of surface-layer region (a2) | Td1 (nm) | Maximum | 22 | 21 | – | – |
| | | | Minimum | 11 | 10 | – | – |
| | Thickness of central region | Tb1 (nm) | Maximum | 8 | 8 | – | – |
| | | | Minimum | 19 | 21 | – | – |
| | | Tc1 (nm) | Maximum | 8 | 9 | – | – |
| | | | Minimum | 19 | 20 | – | – |
| | Total length of central region (L) | | nm | 288 | 444 | 0 | – |
| | Forming ratio of central region | | % | 24 | 37 | 0 | – |

EXAMPLE 18

Further, a coated film of an MRM composition was formed by applying an MRM composition (1) onto the PET surface of a PET film (Toyobo Co., Ltd, trade name: A4100) having a thickness of 100 μm with a No. 10 bar coater, and drying it at 80°C for 1.5 minutes and at 120°C for 1 minute, and a laminated film stacked with a medium- refractive-index film having a film thickness of 60 nm was obtained by hardening the coated film of the MRM composition by passing the coated film at a speed of 4.5 m/min through the portion at 20 cm under a high- pressure mercury lamp (output set at 100%) of 9.6 kW. In this process, the accumulated light amount was 400 $mJ/cm^2$ and the peak illumination was 260 $mW/cm^2$.

The minimum of the thickness (Tbi) of the central region in the obtained medium-refractive-index film of the surface-layer of the laminated film was 12 nm and the maximum was 24 nm. Further, the minimum of the thickness (Tci) of the central region was 10 nm and the maximum was 23 nm. Further, the total length (L) of the lengths (Li) of the central regions without an MO particle was 864 nm (72% of 1,200 nm).

## Claims

1. A film containing metal oxide particles, comprising a central region without a metal oxide particle, a surface-layer region (a1) with metal oxide particles at one side of the central region, and a surface-layer region (a2) with metal oxide particles at the other side of the central region.

2. The film containing metal oxide particles according to claim 1, wherein in a thickness-direction cross-section of the film containing metal oxide particles,
thicknesses (Tbi and Tci) of the central region of the film, which are
a thickness from the center of the film containing metal oxide particles to a interface between the surface-layer region (a1) and the central region and
a thickness from the center of the film containing metal oxide particles to a interface between the surface-layer region (a2) and the central region,
a thickness (Tai) of the surface-layer region (a1), and
a thickness (Tdi) of the surface-layer region (a2) satisfy following Formulae (1) to (4),
while in the thickness-direction cross-section of the film containing metal oxide particles, a total length (L) of lengths (Li) of the central region without the metal oxide particle is 240 nm or more in a length of 1,200 nm perpendicular to the film thickness-direction of the film containing metal oxide particles in the thickness-direction cross-section:

$$0.1T \leq Tbi \leq 0.4T \quad (1)$$

$$Tai = 0.5T - Tbi \quad (2)$$

$$0.1T \leq Tci \leq 0.4T \quad (3)$$

$$Tdi = 0.5T - Tci \quad (4)$$

where Tbi, Tci, Tai, Tdi, and Li are the thicknesses of the i-th central region, the i-th surface-layer region (a1), the i-th surface-layer region (a2), and the length of the i-th central region without the metal oxide particle, and
T is the thickness of the film containing metal oxide particles.

3. The film containing metal oxide particles according to claim 1 or 2, wherein a refractive index of the film containing metal oxide particles is 1.5 to 1.65.

4. A transfer film comprising a low-refractive-index film having a refractive index (Nx), a high-refractive-index film having

a refractive index (Ny), a medium-refractive-index film having a refractive index (Nz) and a separation film, wherein the low-refractive-index film, the high-refractive-index film and the medium-refractive-index film are stacked in this order on one side of the separation film, wherein the refractive indices are measured by a laser having a wavelength of 594 nm and satisfy following Formula (5), and wherein the medium-refractive-index film is the film containing metal oxide particles according to claim 1 or 2:

$$Nx < Nz < Ny \quad (5).$$

**5.** The transfer film according to claim 4, wherein the low-refractive-index film contains inorganic particles and a polymer having units of a monomer (A) containing a perfluoropolyether group and nitrogen atoms.

**6.** The transfer film according to claim 5, wherein the monomer (A) containing a perfluoropolyether group and nitrogen atoms is a monomer expressed by the following structural formula (1):

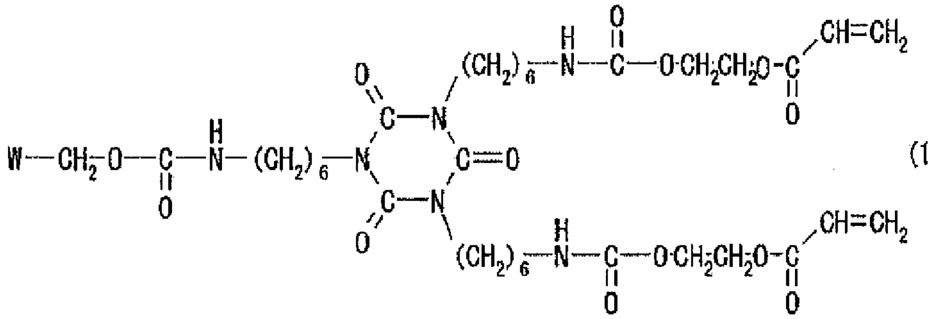

(1)

(where W is a perfluoropolyether group).

**7.** A method for producing a transfer film formed by stacking a low- refractive- index film having a refractive index (Nx), a high- refractive- index film having a refractive index (Ny), and the film containing metal oxide particles according to claim 1 or 2 as a medium- refractive- index film having a refractive index (Nz) in this order, on one side of a separation film, in which the refractive indices are measured by a laser having a wavelength of 594 nm and satisfy following Formula (5),
wherein the method includes stacking the high- refractive- index film after stacking the low- refractive- index film on the side of the separation film, applying a composition for a film containing metal oxide particles, which contains metal oxide particles and a diluting solvent containing 20% by weight or more of a solvent having a volatilization speed of 100 or less, onto a surface of the high- refractive- index film, drying the diluting solvent at a temperature of 140°C or less, and stacking the medium- refractive- index film:

$$Nx < Nz < Ny \quad (5).$$

**8.** A laminate (A) stacked with the film containing metal oxide particles according to claim 1 or 2, directly or with another layer therebetween, on at least one side of a base material.

**9.** A laminate (B) formed by stacking a medium-refractive-index film having a refractive index (Nz), a high-refractive-index film having a refractive index (Ny), and a low-refractive-index film having a refractive index (Nx) in this order, on at least one side of a base material directly or with another layer therebetween, wherein the refractive indices are measured by a laser having a wavelength of 594 nm and satisfy following Formula (5), and wherein the medium-refractive-index film is the film containing metal oxide particles according to claim 1 or 2:

$$Nx < Nz < Ny \quad (5).$$

**10.** The laminate according to claim 9, wherein the low-refractive-index film contains inorganic particles and a polymer having units of a monomer (A) containing a perfluoropolyether group and nitrogen atoms.

**11.** The laminate according to claim 10, wherein the monomer (A) containing a perfluoropolyether group and nitrogen atoms is a monomer expressed by the following structural formula (1) :

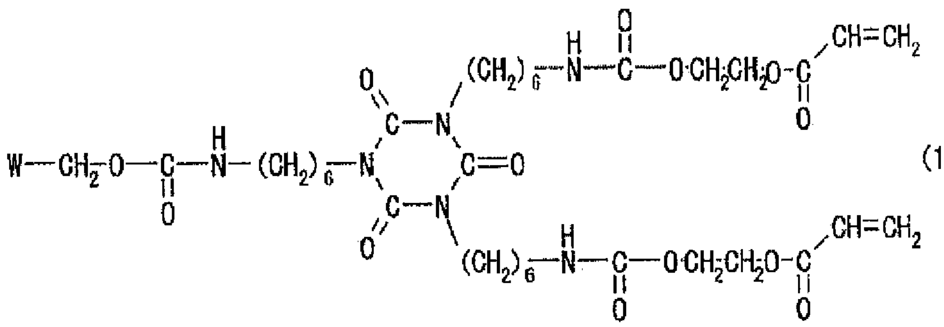

(1)

(where W is a perfluoropolyether group).

**12.** The method for producing the laminate (A) according to claim 8, including stacking a medium-refractive-index film by applying, on a surface of a base material, a composition for a film containing metal oxide particles for forming a film containing metal oxide particles which contains metal oxide particles and a solvent containing 20% by weight or more of a solvent having a volatilization speed of 100 or less, and then by drying a diluting solvent at a temperature of 140°C or less.

**13.** The method for producing the laminate (B) according to claim 9, stacked with a medium-refractive-index film having a refractive index (Nz), a high-refractive-index film having a refractive index (Ny), and a low-refractive-index film having a refractive index (Nx) in this order, directly or with another layer therebetween on at least one side of a base material, wherein the refractive indices are measured by a laser having a wavelength of 594 nm and satisfy following Formula (5), and wherein the method includes a process of forming a transfer film laminate substance by bonding a base material and a side of the medium-refractive-index film of the transfer film according to any one of claims 4 to 6 with a coated film for forming an adhesion layer therebetween, a process of forming a transfer film laminate by obtaining an adhesion layer from the coated film for forming the adhesion layer, and a process of forming a laminate by separating a separation film from the transfer film laminate:

$$Nx < Nz < Ny \quad (5).$$

**14.** The method for producing a laminate according to claim 13, wherein the coated film for forming the adhesion layer includes an active energy ray-curable mixture, and in the transfer film laminate forming process, the adhesion layer is obtained by hardening the active energy ray-curable mixture by radiating active energy rays onto the coated film for forming an adhesion layer, thereby forming the transfer film laminate.

FIG. 1

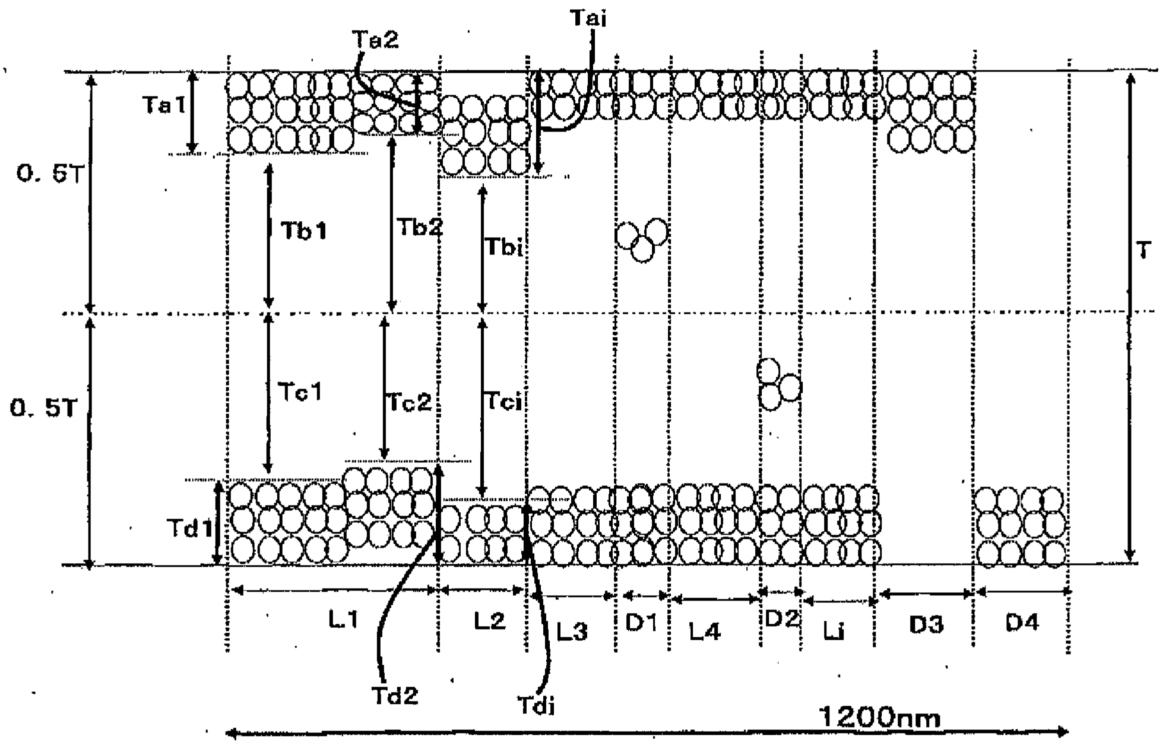
Tai
Ta2
Ta1
0. 5T
Tb1
Tb2
Tbi
T
0. 5T
Tc1
Tc2
Tci
Td1
L1
L2
L3
D1
L4
D2
Li
D3
D4
Td2
Tdi
1200nm

## INTERNATIONAL SEARCH REPORT

International application No.
PCT/JP2011/079796

A. CLASSIFICATION OF SUBJECT MATTER
*G02B1/11*(2006.01)i, *B32B5/14*(2006.01)i, *B32B7/02*(2006.01)i, *C08G65/333*(2006.01)i

According to International Patent Classification (IPC) or to both national classification and IPC

B. FIELDS SEARCHED

Minimum documentation searched (classification system followed by classification symbols)
G02B1/11, B32B5/14, B32B7/02, C08G65/333

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 2007-038199 A (JSR Corp.),<br>15 February 2007 (15.02.2007),<br>claims; paragraphs [0010], [0025] to [0028];<br>fig. 1C<br>& WO 2006/051833 A1 | 1-3,8<br>4-7,9-14 |
| A | JP 2003-322703 A (Fuji Photo Film Co., Ltd.),<br>14 November 2003 (14.11.2003),<br>paragraphs [0011] to [0015]<br>(Family: none) | 1-14 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 15 February, 2012 (15.02.12) | 28 February, 2012 (28.02.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2011/079796

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III Observations where unity of invention is lacking (Continuation of item 3 of first sheet)**

This International Searching Authority found multiple inventions in this international application, as follows:

The inventions of claims 1, 3 and 8 is not considered to be novel in the light of the invention disclosed in the document (JP 2007-038199 A (JSR Corp.), 15 February 2007 (15.02.2007), [claims], [0010], [0025]-[0028], fig. 1C), and does not have a special technical feature. Consequently, the inventions of claims 1-14 are lack in unity.

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2004310135 A
- JP 2003103680 A
- JP 2004345333 A